Europäisches Patentamt

European Patent Office

Office européen des brevets

(11) Publication number: **0 431 231 A1**

# EUROPEAN PATENT APPLICATION

(21) Application number: 89480182.8

(22) Date of filing: 06.12.89

(51) Int. Cl.5: **H04L 12/66**, G06F 15/16

(43) Date of publication of application:
**12.06.91 Bulletin 91/24**

(84) Designated Contracting States:
**DE FR GB IT**

(71) Applicant: **International Business Machines
Corporation
Old Orchard Road
Armonk, N.Y. 10504(US)**

(72) Inventor: **Favre, Philippe
84 Avenue Sainte Marguerite
F-06200 Nice(FR)**
Inventor: **Gerlier, Guy**

**20 Allée du Lac Inférieur
F-78110 Le Vesinet(FR)**
Inventor: **Mariotti, René
14 Rue de Chateauneuf
F-06000 Nice(FR)**
Inventor: **Mouremble Christiane
28 Avenue Fragonard
F-06400 Cannes(FR)**

(74) Representative: **Tubiana, Max
Compagnie IBM France Département de
Propriété Intellectuelle
F-06610 La Gaude(FR)**

(54) Generation monitor system for customizing a data communication network.

(57) The generation monitor system provides a menu-driven facility for customizing to non-SNA traffic, the software facilities enabling an SNA-based network to monitor and control traffic to and from DTE's attached to said network through at least one network node. The system includes prestored macro-skeleton facilities, means for inputting network component parameters on a request basis, means for cross-checking parameters coherence. The provided parameters and macro-skeletons are used to derive macro-statements, which once compiled, provide the required traffic monitoring and controlling software facilities.

FIG.3

# GENERATION MONITOR SYSTEM FOR CUSTOMIZING A DATA COMMUNICATION NETWORK

## Field of the Invention

This invention deals with data communications and more particularly with communications network management and systems for customizing said networks.

## Background of the Invention

Data communication and processing networks are rather complex networks. They have traditionally been built based on different approaches. For instance, IBM networks are built according to so called Systems Network Architecture (SNA), while private networks may be based on different architecture, e.g. implementing X.25 CCITT Standards. Merging both SNA and non-SNA networks into a single network has been achieved thanks to IBM facilities (XI : i.e. X.25 SNA Interconnection) extending SNA network facilities to X.25 network. Such an extended network may herein be referred to as an XI NETWORK.

For details on the so-called XI network, one may refer to IBM publications GH 19-6575-1 (General Information Manual) and GH 19-6577-1 (Planning and Installation), both published as second editions in October 1988.

In summary XI operates in a IBM-37XX-NCP environment providing X.25 DTE's support for accessing services in an SNA network. XI is thus built on top of NCP programming interfaces.

Using XI, SNA network appears as a private network for transporting data packets according to the X.25 Standards. The network nodes (XI nodes) include Communications Controllers such as IBM-3725, interconnected through SNA links to provide routing functions of an SNA network subarea. At least one host provided with VTAM access facilities is required for controlling this network. XI includes interface facilities for attaching DTE's to XI network nodes. Also, interconnecting nodes and host(s) is achieved through SNA sessions. Said sessions are pre-set upon initiating the system and are immediately available to transfer data packets. X.25 DTE's may then exchange data packets with each other, either through a commonly attached XI node, or through their respective XI nodes and SNA session devoted to interconnecting said respective XI nodes.

It should however be noted that tailoring customer's SNA network to enable it handling X.25 traffic involves customizing both network host(s) computer(s) and each SNA network node processing X.25 traffic (XI node). The above is achieved by customizing the network through generating software facilities for the host(s) and for each XI node. Such a customization is a long and troublesome operation to be performed on a node by node basis and cross-checked on-line. Node definition inconsistencies (i.e. incoherences or incompatibilities) inevitably do occur, and need to be corrected prior to the network being set ready for operation.

## Summary of the Invention

One object of this invention is to provide a generation monitor system for a global approach to define topology and generate the required software resources for managing X.25 Network traffic on an SNA environment whereby network resources coherences are being on-line cross-checked.

Another object of this invention is to provide a data base software image of the customized network (i.e. a Customer's environment data base) enabling convenient and simple subsequent accommodation of the network to any updated customer requirement.

More particularly, the invention provides a generation monitor system for customizing to non-SNA traffic, the software facilities enabling an SNA- based network including at least one host computer, to monitor and control traffic to and from Data Terminal Equipments (DTE's) attached to said network through at least one network node, said system including :
- prestored macro-skeleton facilities;
- means for inputting network component parameters on a hierarchical basis;
- cross-checking means sensitive to said inputted parameters for checking network consistancy and detecting any network incoherences;
- macro-statement generating means sensitive to said inputed parameters and to said macro-skeletons to generate macro-statements;
- compilation means for compiling said macro-statements and for deriving therefrom the software facilities to be loaded into said host computer(s) and corresponding network node(s), whereby said system is being customized to non-SNA traffic.

## Description of the Drawings

The foregoing and other objects, aspects and advantages of the invention will be better understood from the following detailed description with reference to the accompanying drawings, in which :
- Figure 1 represents separate prior art networks;
- Figure 2 illustrates data formatting;
- Figure 3 represents merged network based on IBM-XI facilities;
- Figure 4 shows interface mapping;
- Figure 5 is an illustration of network data bases organized thanks to the invention;
- Figure 6 shows a CMS file structure for the invention;
- Figures 7-9 show general flow-charts illustrating the invention operation;
- Figure 10 includes Figures 10A through 10N representing a detailed flow-chart for implementing the invention.
- Figure 11 shows an example of network selected for implementing the invention.

Represented in Figure 1 are two separate conventional networks : one based on IBM - SNA Architecture, devoted to managing SNA Data Terminal Equipments (DTE); the other based on CCITT X.25 architecture for X.25 DTE's.

The SNA network selected to illustrate the invention, is fairly simple; it includes two nodes each including a Communications Controller (e.g. belonging to the IBM-37XX family, such as an IBM-3725) made to control traffic to and from SNA DTE's. To that end, each controller is provided with an IBM Advanced Communications Function for the Network Control Program, herein and conventionally referred to as NCP. The Communications Controllers are connected to a host computer provided with software facilities, some devoted to performing applications (e.g. mailing, etc.....); others, such as IBM-NetView, made to monitor and manage the network, as well as diagnose any problems through a network operator terminal (OPER 1); or such as Virtual Telecommunications Access Method (VTAM) program providing means for controlling the flow of data within the SNA network represented in Figure 1.

The X.25 Network is made to connect X.25 DTE's through leased lines, with switched lines available for DTE to DTE connection for instance in case of X.25 Network unavailability.

Data flowing within the SNA Network are structured according to SDLC format, while those flowing through the X.25 are in a different format defined by the CCITT. IBM software facilities X.25 SNA Interconnection (XI) are available to users to enable multiplexing X.25 traffic on SNA LU-LU sessions established between SNA nodes or between nodes and host, as well as enabling traffic between X.25 DTE's attached to same node, and providing host facilities applications support to said X.25 DTE's.

Figure 2 illustrates XI function converting X.25 DTE generated packets into SDLC frames and (conversely) for transportation over the SNA network. On the transmitting side X.25 packets are embedded into SDLC frames to enable transportation over the SNA network. Therefore, X.25 packets need extracted from the SDLC frame, on the receiving side, prior to being provided to their destination X.25 DTE.

Figure 3 illustrates an XI network merging both SNA and X.25 networks of Figure 1 into a single SNA Network using the XI facility, or in other words, an X.25 network on top of an SNA backbone. Each network node made for handling X.25 traffic is herein referred to as an XI node. It should also be noted that the X.25 SNA Network Supervisory Function (NSF) is added to the host, or, in a multi-host network, to at least one of said hosts. Said software facility enables operator control of a set of XI nodes and reports traffic statistics and accounting information via SNA sessions pre-established between NSF and XI nodes. NSF host is used to designate an NSF provided host.

From a software architecture standpoint, in any XI node, XI programs will run under NCP. NSF will run under NetView, while both NetView and VTAM run under IBM-Multiple Virtual Storage (MVS) programs.

XI also provides specific interfaces within the network. An interface mapping is illustrated in Figure 4.

Node Management Function (NMF) provides an SNA interface to the NSF/NetView host for control and reporting, using an LU-LU session with NetView subtask.

Data Circuit Terminating Equipment (DCE) interface provides an X.25 DCE interface to an attached DTE.

Data Exchange Equipment interface (DXE) provides an X.75 like interface for exchanging packets between XI nodes, using an LU-LU session.

Gateway Data Terminal Equipment (GW__DTE) provides an X.25 DTE interface to the XI network attached to another X.25 packet-switched data network (PSDN), like, for instance for connecting different networks together.

NPSI bridge (NPSIB) provides a direct interface to NPSI within same XI node. For this purpose, pseudo-DTE's are defined on the XI side of this bridge. X.25 DTE's attached to the XI network can use NPSI functions to access SNA hosts applications (e.g. CICS).

Under NCP, XI runs in 37XX nodes, using the customization facilities of NCP including User Line Control (ULC) to replace standard SDLC line protocol by LAPB; and programmed ressources to implement virtual user coded SNA resources within NCP (e.g. LU).

For rendering the XI network operational, XI resources are defined by coding generation software facilities (macros or macro-statements) using the network parameters defined above, which macros are then compiled or assembled to generate programs to be used in NCP and NSF as well as in the XI-Nodes for controlling the system. As defined in the above cited IBM-XI references, conventional means for achieving the macros generation proceeds manually, considering each node or host separately. This leads to complex and time consuming operations. In addition, no automatic network parameters coherence checking are provided. The programs, once generated need being loaded to enable on-line testing, which again adds to complexity and time consumption.

This invention provides for a user's friendly generation monitor made for customizing a given network or in other words for generating the software facilities (macros-statements) required for tailoring XI to a given user. The system operates on a menu-driven basis to control loading the network parameters. Said parameters, once provided to the generation monitor system through an operator terminal (OPER1) keyboard, which might be attached to any host provided with adequate software facilities, are used to generate the macros-statements. Said parameters will also be made available to the generation monitor through customer's environment data bases. In addition on line parameter consistencies are checked and the operator's attention is called to any data mismatches and corrections are requested. Also, default parameters values are pre-set into the system, which default values can be amended by the operator, as required, while costomizing the network.

To that end, the system of this invention is organized to consider the network as a hierarchical entity to be globally defined and managed, instead of aggregated nodes. Hierarchically means defining sequentially, for instance :

1. NSF host(s)
2. XI nodes (Communications Controllers)
3. Resources attached to nodes :
   a) X25 DTEs
   b) External PSDNs Gateway
   c) X25 NPSI DTEs
4. Resources Interrelations, network topology :
   a) Permanent Virtual Circuits (PVCs)
   b) XI Internal network routing
   c) Routing to/from external PSDNs
   d) Network peak traffic assumptions

As already mentioned, the system operation proceeds on menu-driven principles. Consecutive panels are organized to meet customer's own logic. Prompted informations are ordered into tables and cross-checked. This insures an on-line global consistency checking at network level after processing each data parameters requesting panel.

Any data, derivable from already provided data, is not requested again. For instance, the internal network routing is entirely built from the list of XI nodes; the user is only required to modify, or default, parameters. As already mentioned, most of prompted data are preassigned default values chosen for being optimal for a customer start-up configuration.

Dialog rules have been set. For instance, exiting a panel requires full validation of all user inputs. When an erroneous input is detected,the panel is redisplayed with a cursor pointing to the error and an error message is being displayed.

Also, help facilities are made available and accessible if needed.

Reaccess to a previously defined network element is always possible, by reloading a Customer's data base provided by the system. Said data base availability also helps if interruption is required in operating the generation monitor system.

Since the system generates a comprehensive customer's data base of the customer's XI/NSF configu-

4

ration, it provides a flexible structure enabling easily accommodating further extensions or changes in the customer's requirements.

To that end, system generated customer's data are organized into three sets of tables to be included in a customer's Environment Data Base (see Figure 5) :

- Customer Description Table(s) (XCT) describe an XI customer's network using common attributes.
- Host Description Table(s) (XHDT) relate to each NSF host associated with a specific XCT.
- a Node Description Table (XNDT) describes each XI node within the XI network.

Logical pointers are made available in the XCT tables, to point to each dependent XHDT and XNDT tables for corresponding network NSF host(s) and XI nodes. Likewise, pointers to XNDT tables are available in XHDT tables. The table contents are structured as conventional CMS files each being defined by a filename (Fn), a filetype (Ft) and a filemode (Fm), as illustrated in Figure 6. The filename and filemode use customer references "custname" and "custmode". This enables storing in a centralized data base all the data relative to different customers and wherefrom said data would be fetched for any further network modification/updating.

A general view of the invention system operation is schematically represented in Figure 7. The operating and help panels include data enabling establishing a dialog with the generation monitor system user (operator).

The data entered through the operator keyboard are used to define the network resources and topology (consistency is on-line checked for validity).

The set of tables are generated. Said tables, together with macro-skeletons defining the fixed parts of the macros wherein the operator provided parameters are to be inserted, are then used throughout the process to generate the XI macros-statements (see above cited IBM-XI references). Said macros-statements need then only be compiled or assembled using Job Control Language (JCL) tools, to generate the programs to be loaded into the host(s) and into each XI Node of the considered network.

As already mentioned, the system operation is organized in a hierarchical basis. The generation sequence starts with NSF host(s), then proceeds with the nodes and their attached devices, to finally deal with inter-node relationships.

Said hierarchy is summarized in Figures 8 and 9. The operator is first presented a first panel (menu) requesting information for defining customer's environment. The inputed data are used to initiate the system, while being also saved in a Customer Environment XCT table. Any al ready available data defining customer environment and previously stored by the system is automatically retrieved. This is particularly convenient when network updating is being requested.

The system may then proceed with defining a first host starting with a host generation input file (NSF GENDECK) which assembles and link edits definition statements so that the resources can be identified to all necessary programs in the network. The data are stored in the host table files (XHDT). Should a multi-host network be considered, definition would proceed on a host by host basis. Thus the sequence of panels would be redisplayed until all hosts have been defined.

The system proceeds with XI node definition. For each node, the interfaces are sequentially defined, starting with each DTE, then proceeding with gateway(s) and NPSI, etc... Once a node has been defined the operation is repeated until all nodes are processed.

The system proceeds with inter-node means. Some virtual circuits interconnecting nodes are assigned a logical channel on a permanent basis, they are designated as permanent virtual circuit (PVC). The conventional call establishment protocol is not required in this case. Said virtual circuits will be defined separately, and sequentially with correlative on-line consistency checking. The collected data are used to update the customer environment table (XCT) accordingly. Other internode routings may then be defined and XCT tables updated. Similar table storing operations apply to host tables (XHDT) and node tables (XNDT) as well.

Should external network(s) be connected to the network being currently defined, routing for said external PSDNs are processed and again XCT tables updated. Said external PSDNs routing facilities are separately and sequentially defined for both to and from directions.

The system is then fully defined and macros are system generated including statements in IBM 370 assembler language. These macros-statements are then assembled into machine language programs using Job Control Language (JCL).

Represented in Figure 10 (including Figures 10A through 10N) is a detailed flowchart for the invention system as made available to the operator, e.g. OPER1. Upon performing log-on operations, the operator is first requested network general information relative to customer's environment (see Fig. 10A). The operator is first requested to provide customer's name, environment identifier to be used as a reference for the files to be generated, and a minidisk reference for storing files to be generated.

Given the above information, the system scans already available customer's list. Should data relative to presently involved customer network be already available, prestored data are being fetched and loaded into the system.

A panel is then displayed to the operator, with cursor accessible field for simply amending, if needed, or typing-in new requested data relative to general attributes of the considered network. More details about said data definitions and characteristics will be provided upon describing a specific implementation relative to Figure 11. All data entries are performed on a menu driven basis, through operator keyboard operation (see Figure 10B).

Next, NSF informations are requested starting with an NSF Host subarea number. It should be recalled here that the system is made for customizing large and complex networks. Therefore once a host has been defined, the system proceeds by redisplaying the same set of menues for defining next host (if any). Once the last host is set, no new subarea number is fed-in by the operator, thus leaving a blank in corresponding field. Then, depressing the enter key the operator triggers a test initiating a GOTO flow-chart of Figure 10D.

Assuming a NSF Host subarea number was keyed-in by the operator, the system checks for consistency. A test is performed to check whether the keyed-in subarea number was already used. In case of positive checking, the new number may have been already assigned and now reassigned by error for a different subarea, or may be dealing with same area previously referenced. In the latter case the subarea number is reinjected into the process and the system proceeds. Otherwise the same menue/panel is displayed requesting a different subarea number.

Once the subarea number is OKeyed, NSF General attributes are requested from the operator (see Figure 10C and description with reference to Figure 11).

To enable limiting network traffic interruptions for failure, optional back-up circuits may be defined, using a different NetView domain and a different NSF Host subarea.

Next panel requests for keying-in NSF general informations. Default parameters are available.

The system proceeds then with requesting NSF logging information. When completed, upon depressing the enter key, the data provided up to that point are used by the system to create and store NSF and XHDT files as defined in the above cited XI references. A list of said created files is displayed to the operator. NSF definition is terminated for the considered subarea and the system automatically switches back to the process for defining next NSF Host (Figure 10B), and this until last network subarea has been processed. In which case, upon getting again the NSF Specification panel displayed, the operator leaves the subarea number field blank, and the system GOTO the algorithm of Figure 10D, calling for XI-Nodes definition, starting with general informations being requested.

An XI Node subarea number is requested and until the corresponding displayed panel field is left blank, the system proceeds. First, as done for the Host, already used numbers are checked, leading to reinjection requirement tests and possibly, reinjection being operated prior to proceeding further with defining XI and XI Controller specifications (see Figure 10E and description of Figure 11 for more details).

Specific XI-Node definition may then start with providing DTE informations for the considered XI-Node (see Figure 10F). Upon starting defining a specific DTE attached to the considered XI-Node (count = 0), the system switches to panel XI DTE Specifications (part 1) to request DTE specifications and characteristics relative to the line interconnecting XI-Node to DTE. Obviously, the DTE should at least bear a reference (address).

A blank left over said address field switches the system off DTE definition and into Gateway (GW) definition scheme (Figure 10H). Otherwise, once no address ambiguity (already used) is checked, the system proceeds with further defining the DTE (Figure 10G), part 1 is ran again calling the operator for feeding-in the following information :
- DTE physical link address : i.e. the DCE address used for attaching the considered DTE.
- Line speed characteristic.
- Clocking means : internal or external clock.
- Link problems determination facilities to be made available to DTE.

The system switches then to next parts (2, 3 and 4) calling for additional DTE characteristics to be filled-in, prior to switching back to the system of Figure 10F.

Since each XI-Node normally services several DTE's, count is now set to 1 and therefore count test switches the system to XI DTE specification (part 5). A new DTE is specified. This starts with assigning a DTE address. Then, facilities have been provided to simplify the operator's task. To that end, the currently processed DTE may either be assigned prestored (default) characteristics, or be assigned same characteristics as last processed DTE or as any other already processed DTE. In any case, however, loaded values may be amended as needed.

The above DTE processing is repeated, until the DTE address field is left blank, which makes the system switch to gateway (GW) definition (Figure 10N). As already done When defining DTE's, the operator is first requested a GW address and a physical link address. Also requested is the line speed which is provided a default value (9600 bps) the operator can override with a different value e.g. from 2400 to 64000 bps.

Next GW characteristics to be provided are represented in Figure 10I providing several panels. First panel (XI GW specification) is simply a repetition of the just displayed panel. Next panel calls for GW link level data including self explanatory requirements all assigned default values :

- Frame window size (1 to 7) : 7
- Retransmit timer T1 (5 to 60 decisec) : 30
- Retry count N2 (3 to 31) : 10
- Inactivity timer (10 to 4095 decisec) : 30
- RR frame delay T2 (0 to 30 decisec) : 0

(NB. decisec meaning 1/10 second).

The window size defines the number of information frames a DTE or DCE can send accross the link before waiting for authorization to send another frame.

RR stands for "receive ready".

Next panel calls for inputing packet level data such as :

- X.25 Version (1980 or 1984).
- Packet modulo (1 = 8 or 2 = 128).
- IN and OUT window sizes (1 to 7).
- IN and OUT packet sizes (64; 128; 256; 512 or 1024).
- Flow control parameter negotiation (Y or N).

The last request enables defining a packet switched data network optional facility which allows a DTE to negotiate packet and window sizes for communication with another DTE.

Finally, the operator is requested logical channel data, such as, group references for switched virtual circuits, or data relating to network identification code (DNIC).

As shown in Figure 8, XI-Node definition is completed upon defining NPSI data (see also Figure 10J). The system starts with defining NPSI bridge, i.e. XI/NPSI interfaces in an XI Node. A first panel is displayed requesting the operator to enter the DTE address to be used for the NPSI bridge. It then proceeds with defining X.25 version to be used and IN/OUT window sizes (see Figure 10K), and defining logical channel subscriptions such as permanent virtual circuits or direct calls and switched virtual circuits as called for when defining DTE specifications (see Figure 10G).

The above data once provided, are used to generate the XNDT files or tables defining the node. Once no additional NPSI bridge is to be defined, i.e. DTE addresse requested (see Figure 10J) is left blank, then the system switches back to XI-Node information request (Figure 10D) to start defining next XI-Node of the network, until XI-Node subarea number is left blank, whereby the system switches to requesting additional data relating to the network (see Figure 10L).

Some Virtual circuits may have permanently assigned logical channels at each DTE equipment. The usual call establishment protocol is therefore not required. One needs then provide PVC information on DTE address and Logical Channel (LC) for both primary and secondary sides.

Similarly, automatic direct DTE to DTE connection may be considered as soon as said DTE's are switched on (Direct Call). In this case the operator is called to provide DC information, i.e., for each primary side DTE address and Logical Channel number, and for each secondary SVC side the DTE address. Once depressing the "enter" key, the operator makes the system check for LC/SVC definitions consistency, given the specified rules (e.g. numbering) and the network as already defined and stored in the XCT files. Any inconsistency is pointed-to.

The system switches then to internode routing linkage. An already filled-in panel (modifiable) based on the specifications already loaded or computed by the system e.g. all pairs of XI nodes, assuming a fully meshed XI network, bandwith, transit delay and logical channels computed count for each pair of XI nodes are presented to the operator; the operator can confirm or change the proposed default values (Figure 10M).

The related routing information defined once it this process are propagated in each node definition which garanties internode parameter consistancy.

Next step deals with external PSDN routing. For outgoing calls, assuming such a routing is necessary, the panel will have been already filled-in by the system. The operator checks for validity of the filled-in data and deletes unneeded routes. For incoming calls, another panel is presented. Data Network Identification Codes and DTE addresses are set by the system. The only parameters to be set (if necessary) are default DTE addresses to which the considered gateway is to be routed (Figure 10N).

The network parameters loading phase is now over and the Customer Configuration Data Base is updated. Depressing the operator's terminal enter key triggers the system to generate the required macros by loading the Configuration Data into prestored macro skeletons. The operator is even provided a list of the generated macro-statements. These macros are then compiled or assembled to provide the machine language XI files, i.e. XI Stage-1 files and NPSI stage-1 files stored by the system.

Finally, effectively customizing the customer's network will be achieved by simply loading those files into customer's network host(s) and XI-Nodes.

The system will now be described for being implemented for the network as represented in Figure 11 including one host assigned a subarea number 001, two subarea nodes (numbered 12 and 15) each including XI node addresses 111 or 222 respectively, one DTE numbered 4320 and 0230 respectively attached to each node. Such a network is similar to the network of Figure 3. Obviously, this is a very simple network but, in view of the considerations on the recurrent network interfaces defining means, such a network is not limitative. Given the description enclosed herein, extension to a more complex network would be within the limits of a man skilled in the art.

When initiated, the system displays first a customer identification panel as shown hereunder:

```
┌─────────────────────────────────────────────────────────────┐
│                                                             │
│                                                             │
│                  Customer Identification                    │
│                                                             │
│                                                             │
│       Please specify :                                      │
│                                                             │
│                                                             │
│          Customer Name          : tubiana                   │
│                                                             │
│          Environment identifier  : examp                    │
│                                                             │
│          Output minidisk (B to Z) : g                       │
│                                                             │
│                                                             │
│       PF1=Help        Enter=Continue         PF12=Exit      │
│                                                             │
└─────────────────────────────────────────────────────────────┘
```

The system is therefore provided with three parameters :
- the customer name up to 8 alphanumeric characters. This customer identifier (id) will be used throughout the process as the Filename (Fn) for all the files being generated.
- the environment identifier : up to 5 alphanumeric characters to be used as last digits for the Filetype (Ft) of files to be generated.

The Filemode (Fm) for all these files will be represented by a one alpha character selected between B and Z.

These data are used by the system to identify XCT tables TUBIANA XIGEXAMP (see Attachment I).

Depressing enter key switches to next panel requesting network general attributes as shown hereunder. One may notice that customizing already started and subsequent panels will bear customer and environment references as provided.

```
┌─────────────────────────────────────────────────────────────┐
│                                                             │
│              Network general attributes                     │
│                                                             │
│                                                             │
│      Customer= TUBIANA            Environment= EXAMP        │
│                                                             │
│                                                             │
│   Please specify the following informations :              │
│                                                             │
│                                                             │
│      Node digit number        (Q=)  :  3                   │
│                                                             │
│      DTE  digit number        (P=)  :  4                   │
│                                                             │
│      DTE  Subaddress          (N=)  :  1                   │
│                                                             │
│      Relative Address Prefix  (RAP) :  8                   │
│                                                             │
│      X.121 Address Prefix     (XAP) :  7                   │
│                                                             │
│                                                             │
│      NSF/NMF Password                    :                 │
│                                                             │
│                                                             │
│   (-Just Press Enter to keep the Default values )          │
│                                                             │
│                                                             │
│   PF1=Help     PF3=Return    ENTER=Continue      PF12=Exit │
│                                                             │
└─────────────────────────────────────────────────────────────┘
```

Said attributes, commonly designated Q, P, N, RAP and XAP for the above cited XI references, respectivelly designate:

Q : number of digits identifying a node in a DTE address.

P : number of digits identifying a DTE in a DTE address.

N : number of digits to be used in a DTE address for subaddressing.

RAP : defines an XI network relative address prefix.

XAP : X.121 address prefix of the XI node.

No XAP need be defined for the network being customized (Figure 11), but a default value is set to 7 and kept therein.

Next panel displayed upon depressing the enter key, informs the user of the references assigned to the generation table created, i.e. TUBIANA XIGEXAMP G. The general information on the network customer environment stored therein will be available to the subsequent macros generation process. The system proceeds with defining NSF host starting with host sub-area numbering (001) and then further defining NSF general attributes.

```
                    NSF general attributes


Customer= TUBIANA    Environment= EXAMP    Subarea(coding)= 001(A1)


        Please specify the following Informations :


            Operating System                    :  1
            ( 1=MVS/XA or 2=MVS/370 or 3=VM/SP )


            Network Manager's Name              :  XINETMRG


            Backup Option  ( Y=Yes or N=No )    :  N


        PF1=Help    PF3=Return          ENTER=Continue    PF12=Exit
```

The operating system type is selected among MVS/XA, MVS/370 or VM/SP. Also, a network manager's name is defined; and, should a back-up host be available, the system should get the information. No back-up option was selected.

Next NSF general attributes required are NetView operator identification (id) (oper1); associated NetView domain-id (netw1); and the maximum number of nodes to be under NSF supervision.

Potential extension being considered, said maximum number of nodes is set to 5, eventhough only two nodes are presently considered for being used.

Depressing the enter key switches to the system requesting NSF logging information such as VSAM or SMF.

```
┌─────────────────────────────────────────────────────────┐
│                                                           │
│              NSF Logging informations                     │
│                                                           │
│                                                           │
│  Customer= TUBIANA    Environment= EXAMP    Subarea(coding= 001(A1) │
│                                                           │
│                                                           │
│     Please specify the following informations :           │
│                                                           │
│                                                           │
│        Logging type selection    ( 1=VSAM or 2=SMF)   :   1 │
│                                                           │
│                                                           │
│                                                           │
│        VSAM first file identification            :   1    │
│        ( VSAM Only :   1=XIACNT1 or 2=XIACNT2 )           │
│                                                           │
│                                                           │
│        SMF identifier  ( SMF only )  ( 200 to 255 )  :  ___ │
│                                                           │
│                                                           │
│        SVC number  ( SMF only ) ( 200 to 255 )       :  ___ │
│                                                           │
│                                                           │
│     PF1=Help    PF3=Return        ENTER=Continue   PF12=Exit │
│                                                           │
└─────────────────────────────────────────────────────────┘
```

for VSAM, accounting file name is required. Assuming a host back-up was declared previously, back-up information will be requested. This was not the case presently. A simple depression of enter key by-passes corresponding panel and switches to next panel showing a list of files the system built and stored (see next table).

```
                        Data Entry completed...


Customer= TUBIANA    Environment= EXAMP    Subarea(coding= 001(A1)


        Files created :


    Host description Table    :    A1XHDT        XIGEXAMP    G


    NSF generation input      :    A1NSFGEN      XIGEXAMP    G


    NSF definition to NETVIEW :    A1NETV        XIGEXAMP    G


    Logon parameters for DXE  :    A1MODTB       XIGEXAMP    G


    NSF definition to VTAM    :    A1VTAM        XIGEXAMP    G


        Please press   ENTER   to continue ......
```

These files will be used by the system as input files.
Samples of these files are provided herein as Attachment I.
Host customization is completed and XI nodes definition may get started on a node by node basis. First node subarea reference is set to be 12.

```
┌──────────────────────────────────────────────────────────────┐
│                                                                │
│                    XI Specifications                           │
│                                                                │
│                                                                │
│   Customer = TUBIANA          Environment = EXAMP              │
│                                                                │
│                                                                │
│   Please specify the following information :                   │
│                                                                │
│                                                                │
│   XI Node Subarea number  (1 to 255)     :    12_              │
│                                                                │
│                                                                │
│   PF1=Help              ENTER=Continue           PF12=Exit     │
│                                                                │
└──────────────────────────────────────────────────────────────┘
```

```
┌──────────────────────────────────────────────────────────────────┐
│                                                                    │
│                    XI Specifications                               │
│                                                                    │
│                                                                    │
│  Customer= TUBIANA    Environment = EXAMP   Subarea(coding)= 012(B2)│
│                                                                    │
│                                                                    │
│     Please specify the following information :                     │
│                                                                    │
│                                                                    │
│        XI Node address       ( 3 digits )        :   111____       │
│                                                                    │
│                                                                    │
│        Owner Host NSF Subarea number  (1 to 255)  :   001          │
│                                                                    │
│                                                                    │
│        Autostart by NSF      ( Y=Yes or N=No )    :   Y            │
│                                                                    │
│                                                                    │
│        XI node generation level ( 0 to 9 )        :   1            │
│                                                                    │
│                                                                    │
│   PF1=Help              ENTER=Continue           PF12=Exit         │
│                                                                    │
└──────────────────────────────────────────────────────────────────┘
```

XI Node address is set to be 111. The other parameters are assigned default references. Given the network architecture selected, none of these is changed. A reference is also provided to help network updatings by entering a node generation level, herein set to 1 indicating that first customer network setting is being performed.

A list of XI controllers supported by the system is displayed. One of these is selected, e.g. IBM 3725 (number 3).

```
┌─────────────────────────────────────────────────────────────────┐
│                                                                   │
│                   XI controller definition                        │
│                                                                   │
│                                                                   │
│  Customer= TUBIANA  Environment= EXAMP  Subarea(coding)= 012(B2)  │
│                                                                   │
│                                                                   │
│      Please specify the correct Controller model :                │
│                                                                   │
│                                                                   │
│      1 - 3745       2 - 3745-xx    3 - 3725        4 - 3725-2      │
│                     (Not supported)                               │
│                                                                   │
│                                                                   │
│      5 - 3720-1    6 - 3720-2     7 - 3720-11     8 - 3720-12      │
│                                                                   │
│                                                                   │
│                                   3                               │
│                                                                   │
│                                                                   │
│      PF1=Help      PF3=Return            ENTER=Continue    PF12=Exit │
│                                                                   │
└─────────────────────────────────────────────────────────────────┘
```

Once all controller characteristics have been provided, the system switches to first XI-DTE specifications. An address (set to 4320 for the system of Figure 11) is requested. The physical link address of said DTE is requested (herein set to 17). It should be noted that the system displays the maximum number of physical links available according to the type of controller selected. Line characteristics include : line speed (set to 19200 bps); type of terminal clocking (internal or external, i.e. provided by a modem for instance); link problem determination support availability.

XI DTE link level and packet level are also requested as represented the following self-explanatory panels :

```
                    XI DTE specifications
                         ( part 1 )
                    Line characteristics


Customer= TUBIANA   Environment= EXAMP  Subarea(coding)= 012(B2)


  Please specify the following informations :


    DTE address (4 digits)1 to 7)              :  4320____
    DTE physical link address (LINE ADDRESS)   :  17_
                    (0 to 255)


    Line speed         (2400 to 64000)         :  19200
    Clocking           (1=DIRECT or 2=EXT)     :  2
    LPDA support       (1=LPDA2 or 2=NONE)     :  2
    Spare status       (Y=YES or N=NO)         :  N


 PF1=Help          ENTER=Continue                  PF12=Exit
```

```
┌──────────────────────────────────────────────────────────────┐
│                    XI DTE specifications                        │
│                         ( part 2 )                              │
│                      XI DTE link level                          │
│                                                                 │
│  Customer= TUBIANA   Environment= EXAMP   DTE address= 4320     │
│                                                                 │
│                                                                 │
│     Please specify the following informations :                 │
│                                                                 │
│                                                                 │
│        Frame window size K   (1 to 7)                 :   7     │
│        Retransmit timer T1   (5 to 60 decisec)        :   30    │
│        Retry count N2        (3 to 31)                :   10    │
│        Inactivity timer Ti   (10 to 4095 decisec) or 0 :  0___  │
│        RR frame delay T2     (0 to 30 decisec)        :   0     │
│        Line type             (1=L or 2=LS or 3=S)     :   1     │
│        Working mode   (forced choice 1=NORMAL)        :   1     │
│                                                                 │
└──────────────────────────────────────────────────────────────┘
```

```
┌──────────────────────────────────────────────────────────────┐
│                         ( part 3 )                              │
│                      XI DTE packet Level                        │
│                                                                 │
│  Customer= TUBIANA    Environment= EXAMP   DTE address= 4320    │
│                                                                 │
│                                                                 │
│     Please specify the following informations :                 │
│                                                                 │
│                                                                 │
│        X25 version           (1=80 or 2=84)           :   1     │
│        Packet modulo         (1=8 or 2=128)           :   1     │
│                                                                 │
│                                                                 │
│        Window size           (1 to 7)           IN :  2_        │
│                                                 OUT :  2_        │
│        Packet size                                              │
│        (1=64 or 2=128 or 3=256 or 4=512 or 5=1024)  IN :  2     │
│                                                 OUT :  2         │
│  Flow control parameter negotiation   (Y=YES or N=NO):  N       │
│                                                                 │
│                                                                 │
│  PF1=Help    PF3=Return            ENTER=Continue   PF12=Exit   │
│                                                                 │
└──────────────────────────────────────────────────────────────┘
```

The system also requests information about Permanent Virtual Circuits (set to 3) or Direct Calls, as well as about Switched Virtual Circuits (set to 10) which could operate one way only, (i.e. incoming or outgoing), or both ways.

No other DTE being attached to node 111 the system is switched back to displaying same panels to define the next XI Node subarea (SA 15, address 222), attached to same host 001. Same type of controller (i.e. IBM 3725) is selected and DTE physical link is selected to be 18.

Permanent virtual circuits are then defined by simply entering DTE addresses and line numbers, for both primary and secondary network sides to be used for traffic.

```
PERMANENT  VIRTUAL  CIRCUITS DEFINITION


    Customer = MYSELF              Environment = MYNETWORK


  Please specify the following information :


  D/R                Primary side              Secondary side

  suppress/    DTE address    LC number    DTE Address   LC number

  repeat       (RAP+P+Q)                    (RAP+P+Q)


    _          81114320__     1__          82220230__     2__

    _          _____       __           _____       __

    _          _____       __           _____       __

    _          _____       ___          _____       __

    _          _____       __           _____       __

    _          _____       __           _____       __


  PF1=Help   ENTER=Continue   PF12=EXIT
```

Given the structure of the XI network of Figure (11) network customizing needs only adding DXE-DXE internode routing definition to be complete. Then, when depressing the enter key, the system is made to display a list of macros statements which were automatically built by using pre-stored macro skeletons. Macro statements generation involved inserting the provided parameters into said skeletons.

```
┌─────────────────────────────────────────────────────────────────┐
│                     IBM Customer Center                           │
│  XIEXP-A70DXE                                                      │
│                                                                   │
│                 Internode Routing linkage ( DXE )                 │
│                                                                   │
│           Customer =              Environment =                   │
│                                                                   │
│       Please specify the following informations:                  │
│                                                                   │
│       from node      to node                                      │
│       address        address       LC count  Bandwidth  Transit delay │
│                                                                   │
│       111____        222____        100_      819175     5000___   │
│       _____         _____         ____      _____     _____    │
│       _____         _____         ____      _____     _____    │
│       _____         _____         ____      _____     _____    │
│                                                                   │
│   PF1=Help      ENTER=Continue                       PF12=Exit    │
│                                                                   │
└─────────────────────────────────────────────────────────────────┘
```

See attachment II providing a list of node 01 macros. See attachment III for details on said macros which need then only be compiled (assembled) and converted into load modules to be loaded into host and XI node controllers accordingly, whereby the network would be fully customized.

For further details on the above macro processing, one may refer to the IBM XI references.

As already stated the system is organized to enable a number of particularly convenient features. For instance the network customizing operations may be interrupted and resumed later on, without wasting time. This, thanks to the hierarchical architecture of the system and customer's tables generation facilities being provided. Simply depressing PF12 key exits from running the system, with possibly resuming operations later on.

And more importantly, further network amendments, or extensions, will only require reinitiating the system which will simply request customer's identification to fetch and load XHDT and XNDT tables within seconds, and display panels accordingly.

For instance, customizing a customers network for, interconnection with another preexisting network needs only defining external PSDN routing facilities.

The system needs first entering the XI node subarea number to be attached to the external network.

Required customer's table(s) are fetched and reactivated for being amended. As shown hereunder, A1XNDTB5 XIGEXAMP G is fetched, for instance.

```
┌─────────────────────────────────────────────────────────────┐
│              XI Processing informations                      │
│                                                              │
│        A1XNDTB5              XIGEXAMP        G                │
│                                                              │
│  This XNDT node description table was previously built.      │
│                                                              │
│                                                              │
│       Create another XI                       :   C          │
│                                                              │
│                                                              │
│       Process this existing XI table          :   E          │
│                          E                                   │
│                                                              │
│                                                              │
│  F3=Return              ENTER=Continue            PF12=Exit   │
└─────────────────────────────────────────────────────────────┘
```

Then, by scanning panels, one reaches External PSDN routing panel. Original node addresses and gateway references are provided as shown hereunder :

```
┌─────────────────────────────────────────────────────────────┐
│                  External PSDN routing                       │
│                                                              │
│      Customer = TUBIANA        Environment = EXAMP           │
│                                                              │
│      Please specify the following informations :             │
│                                                              │
│  D or R      from Node    Default       to PSDN      thru Gateway  │
│  suppress    address      Gateway    DNIC      name  GW-DTE address │
│  or repeat                (Y for YES)                8 digits(RAP+Q+P) │
│                                                              │
│     _        222____        Y        ___    _____   82220240__ │
│     _        111___         Y        ___    _____   82220240__ │
│     _        _____        _        ___    _____   _____    │
│     _        _____        _        ___    _____   _____    │
│                    ( PANEL 1 out of 1 )                      │
│   PF1=Help     ENTER=Continue                   PF12=Exit    │
└─────────────────────────────────────────────────────────────┘
```

Then, upon depressing the enter key, the system updates the macros by amending preexisting macros as required using the newly fed-in data, and the network operator is provided with a list of said macros.

The above, not only shows how convenient the generations monitor system may be to network customizing for merging non-SNA to SNA traffic, but it also emphasizes how conveniently further network modifications may be controlled by amending previously store customer's data bases.

## Claims

1. A generation monitor system for customizing to non-SNA traffic, the software facilities enabling an SNA-based network including at least one host computer to monitor and control traffic to and from Data Terminal Equipments (DTE's) attached to said network through at least one network node, said system including :
- prestored macro-skeleton facilities;
- means for inputting network component parameters on a hierarchical basis;
- cross-checking means sensitive to said inputted parameters for checking network consistancy and detecting any network incoherences;
- macro-statement generating means sensitive to said inputed parameters and to said macro-skeletons to generate macro-statements;
- compilation means for compiling said macro-statements and for deriving therefrom the software facilities to be loaded into said host computer(s) and corresponding network node(s), whereby said system is being customized to non-SNA traffic.

2. A system according to claim 1 including also means for generating Customer Description Tables and means for storing said tables into a Customer Environment Data Base.

3. A system according to claim 2 wherein said Customer's Environment Data Base include customer host tables (XHDT), node tables (XNDT) and internode tables (XCT), said tables being organized as files easily editable or otherwize amended.

4. A system according to claim 3 wherein said means for inputing network component parameters include :
- menu-driven means for requesting customer's network parameters;
- means for reading said customer environment data base and for fetching any already available customer's environment parameters therefrom; and
- keyboard controlled means for amending or otherwise providing requested customer network parameters.

5. A system according to claim 4 wherein said cross-checking means also include means for on-line detecting and pointing out any network parameters mismatches, whereby corrected parameters may be provided prior to the system proceeding any further to the customizing operations.

6. A system according to claim 5 wherein said menu-driven means for requesting customer's network parameters includes :
- menu-driven means for consecutively requesting input of considered network parameters on a hierarchical basis, i.e. starting with host(s) and proceeding with node(s) and internodes parameters; and
- keyboard controlled means for inputting said parameters into the system.

7. A system according to claim 6, wherein said node(s) parameters request are generated repetitively up to last node, prior to proceeding further to internode(s).

8. A system according to claim 7 wherein application software facilities are made available to attached DTE's said system also including means for customizing said application software facilities to non-SNA traffic on a menu-driven basis.

9. A system according to anyone of claims 1-8 wherein said non-SNA traffic includes X.25 CCITT type of traffic.

10. A system according to claim 9 wherein said compilation means include assembler means for assembling said macro-statements.

11. A system according to claim 10 further including storage means for storing a centralized data-base including several customer's environment data-bases; and, means for fetching a specific customer's data base upon simply identifying the customer.

ATTACHMENT I

```
************************************************************************
*                                                                    *
*   XHDT                                                              *
*                      XI Host Description Table                      *
*                      ==============================                 *
*                                                                    *
*    The CMS Definitions (Fn/Ft/Fm) of this XHDT·are the following:   *
*                                                                    *
*           Fn = xxXHDTvv  !   xx = Suffix associated to the          *
*                          !        Host Subarea                      *
*                          ! XHDT = MANDATORY Character Chain          *
*                          !   vv = Version Number for this XHDT      *
*                          !        (any value)                       *
*                                                                    *
*           Ft = Custid    !  Customer id                             *
*                                                                    *
*           Fm = Custmode  !  Customer mode                           *
*                                                                    *
*                                                                    *
*...+....1....+....2....+....3....+....4....+....5....+....6....+....  *
*                                                                    *
*                                                                    *
*    -A-  XI  Environment                                             *
*                                                                    *
*...+....1....+....2....+....3....+....4....+....5....+....6....+....  *
*                                                                    *
*-XIENV   :   Customer Name   Custenv   Cust_id                       *
*                                                                    *
* XIENV   :   TUBIANA        EXAMP       D                            *
*                                                                    *
*...+....1....+....2....+....3....+....4....+....5....+....6....+....  *
*                                                                    *
*                                                                    *
*     -B-  XI NSF Specifications                                      *
*                                                                    *
*     -B1- Host Specification                                         *
*          ( Panels : RA70NFDE , RA70NFEE )                           *
*                                                                    *
*...+....1....+....2....+....3....+....4....+....5....+....6....+....  *
*-HOSTNSF :   HOSTSA=___                   !1=MVS/XA   SFX=__          *
*-HOSTNSF :   ACBNAME=_____    SCP=_  !2=MVS/370 NM-NAME=_____   *
*                                          !3=VM/SP                   *
*                                                                    *
* HOSTNSF :   HOSTSA=001                            SFX=A1            *
* HOSTNSF :   ACBNAME=A001NSF     SCP=1             NM_NAME=XINETMRG   *
*                                                                    *
*...+....1....+....2....+....3....+....4....+....5....+....6....+....  *
*                                                                    *
*                                                                    *
*     -B2- START NSF Specifications:                                 *
*          ( Computed )                                              *
*                                                                    *
*...+....1....+....2....+....3....+....4....+....5....+....6....+....  *
*-ENSNGEN :   NSF_IX=__                                               *
*                                                                    *
* ENSNGEN :   NSF_IX=1                                                *
*                                                                    *
*...+....1....+....2....+....3....+....4....+....5....+....6....+....  *
```

```
*                                                                    *
*                                                                    *
*     -B3- NSF General Attributes:                                   *
*          ( Panels : RA70NFEE , RA70NFFE , RA70NFGE , RA70NFHE )    *
*                                                                    *
*...+....1....+....2....+....3....+....4....+....5....+....6....+....*
*-ENSNNSF :   BACKUP=_  (N=NO Y=YES)      NSFCTRL=_____          *
*-ENSNNSF :   DOMID=_____                 MAXLU=___                 *
*-ENSNNSF :   ACCOUNT=_ (1=VSAM 2=SMF)    SVCNUM=___     SMFID=___  *
*-ENSNNSF :   ACCDD=_ (1=XIACNT1 2=XIACNT2)                         *
*-ENSNNSF :   BACKDOM=_____               BACKSA=_____          *
*                                                                    *
* ENSNNSF :    BACKUP=N                    NSFCTRL=OPER1            *
* ENSNNSF :    DOMID=NETW1                 MAXLU=05                *
* ENSNNSF :    ACCOUNT=1                   SVCNUM=_      SMFID=_    *
* ENSNNSF :    ACCDD=1                                             *
* ENSNNSF :    BACKDOM=_                   BACKSA=_                *
*                                                                    *
*...+....1....+....2....+....3....+....4....+....5....+....6....+....*
*                                                                    *
* NSF Definition End                                                 *
********************************************************************
```

ATTACHMENT I  (part2)

```
**********************************************************************
*                                                                    *
*   XCT                                                              *
*                          XI Customer Table                        *
*                          ===================                      *
*                                                                    *
*   The CMS Definitions (Fn/Ft/Fm) of this XCT are the following:   *
*                                                                    *
*            Fn = Custname  !   Customer Name                        *
*                                                                    *
*            Ft = Custname  !   Customer Name                        *
*                                                                    *
*            Fm = Custid    !   Customer id                          *
*                                                                    *
*                                                                    *
*                                                                    *
*...+....1....+....2....+....3....+....4....+....5....+....6....+....*
*                                                                    *
*                                                                    *
*    -A-  XI  Environment                                           *
*                                                                    *
*...+....1....+....2....+....3....+....4....+....5....+....6....+....*
*                                                                    *
*-XIENV  :   Customer Name   Custenv   Cust-Id                      *
*                                                                    *
* XIENV  :   TUBIANA         EXAMP       D                          *
*                                                                    *
*                                                                    *
*...+....1....+....2....+....3....+....4....+....5....+....6....+....*
*                                                                    *
*-NNET   :   Q=_       P=_       N=__    RAP=_      XAP=_            *
*-NNET   :   PASSWORD=_____                                       *
*                                                                    *
* NNET   :   Q=3       P=4       N=1     RAP=8      XAP=7            *
* NNET   :   PASSWORD=XIONLY                                         *
*                                                                    *
*                                                                    *
*...+....1....+....2....+....3....+....4....+....5....+....6....+....*
*                                                                    *
*                                                                    *
*                                                                    *
*    -B-  Hosts and nodes tables                                    *
*                                                                    *
*...+....1....+....2....+....3....+....4....+....5....+....6....+....*
*-XHDT   :      FILENAME      FILETYPE      FILEMODE                *
*              --------      --------      --------                 *
* XHDT   :      A1XHDT        XIGEXAMP         D                    *
*                                                                    *
*                                                                    *
*                                                                    *
*...+....1....+....2....+....3....+....4....+....5....+....6....+....*
*-XNDT   :      FILENAME      FILETYPE      FILEMODE                *
*              --------      --------      --------                 *
* XNDT   :      A1XNDTB2      XIGEXAMP         D                    *
* XNDT   :      A1XNDTW2      XIGEXAMP         D                    *
*                                                                    *
*                                                                    *
```

```
*                                                                    *
*...+....1....+....2....+....3....+....4....+....5....+....6....+....*
*                                                                    *
*                                                                    *
*                                                        .           *
*    -D-  PVC / DC                                                   *
*                                                                    *
*...+....1....+....2....+....3....+....4....+....5....+....6....+....*
*-PVC     : PRI=_____   PLC=___  SEC=_____    SLC=___      *
*                                                                    *
* PVC     : PRI=81114320     PLC=1    SEC=82220230      SLC=3        *
* PVC     : PRI=81114320     PLC=2    SEC=82220230      SLC=1        *
* PVC     : PRI=82220230     PLC=2    SEC=81114320      SLC=3     .  *
*                                                                    *
*                                                                    *
*...+....1....+....2....+....3....+....4....+....5....+....6....+....*
*-DC      : PRI=_____   PLC=___  SEC=_____            *
*                                                                    *
*                                                                    *
*                                                                    *
*...+....1....+....2....+....3....+....4....+....5....+....6....+....*
*                                                                    *
*                                                                    *
*                                                                    *
*    -E-  NETWORK ROUTING                                            *
*                                                                    *
*...+....1....+....2....+....3....+....4....+....5....+....6....+....*
*-DXE     : LINK=_      PADDR=_____   SADDR=_____              *
*-DXE     :             LCC=___          BAND=_____        TD=_____  *
*                                                                    *
* DXE     : LINK=Y      PADDR=222        SADDR=111                   *
* DXE     :             LCC=4            BAND=819175       TD=5000   *
*-------------------------------------------------------------------*
*                                                                    *
*                                                                    *
*                                                                    *
*                                                                    *
*...+....1....+....2....+....3....+....4....+....5....+....6....+....*
*                                                                    *
*                                                                    *
*                                                                    *
*    -F-  X121 ROUTING                                               *
*                                                                    *
*...+....1....+....2....+....3....+....4....+....5....+....6....+....*
*-X121    : NODE=_____ DNIC=____  PSDN=_____  GW=_____  *
*                                                                    *
*                                                                    *
*                                                                    *
*...+....1....+....2....+....3....+....4....+....5....+....6....+....*
*                                                                    *
*                                                                    *
*    -G-  GW incoming call default routing                          *
*                                                                    *
*...+....1....+....2....+....3....+....4....+....5....+....6....+....*
*-GWD     : GWD_ADDR=_____        DEFT_GWD=_____           *
*                                                                    *
*                                                                    *
*                                                                    *
*...+....1....+....2....+....3....+....4....+....5....+....6....+....*
*                                                                    *
* END NSF CUSTOMER TABLE                                             *
*********************************************************************
```

ATTACHMENT I (part3)

```
* *******************************************************************
* *                                                                *
* *   CUSTOMER :  TUBIANA                                          *
* *                                                                *
* *                      NSF GENERATION :                         *
* *                      ================                         *
* *                                                                *
* *                                                                *
* *                                                                *
* *               APPLICATION TYPE   : NSF                        *
* *                                                                *
* *               APPLICATION NAME   : A001NSF                    *
* *                                                                *
* *                                                                *
* *   NOTE:                                                        *
* *                                                                *
* *                                                                *
* *                                                                *
* *                                                                *
* *                                                                *
* *-----------------------------------------------------------------*
* *                                                                *
* *   CREATED BY : XINETMRG              DATE : 11/15/89           *
* *                                                                *
* *******************************************************************
*
*
*********************************************************
*                     ENSNGEN                          *
*********************************************************
*
        ENSNGEN NSF=1            NSF SEQUENCE NUMBER
*
*********************************************************
*                     ENSNNET                          *
*********************************************************
*
        ENSNNET RAP=8,          RELATIVE ADDRESS PREFIX          X
                XAP=7,          X121 ADDRESS PREFIX              X
                N=1,            SUBADDRESS DIGIT COUNT           X
                Q=3,            NODE ADDRESS DIGIT COUNT         X
                P=4             DTE  ADDRESS DIGIT COUNT
*
*********************************************************
*                     ENSNNSF                          *
*********************************************************
*
        ENSNNSF ACBNAME=A001NSF,  NSF APPLICATION NAME           X
                PASSWRD=XIONLY,   NSF-NMF SESSION PASSWORD       X
                DOMID=NETW1,      NETVIEW DOMAIN ID              X
                NSFCTRL=OPER1,    DEFAULT NETVIEW OPERATOR ID    X
                MAXLU=05,         MAX XI NODE COUNT              X
                ACCOUNT=VSAM,     ACCOUNTING TYPE                X
                ACCDD=XIACNT1,    FIRST VSAM FILE (ACCOUNT=VSAM) X
                BACKUP=NO         NSF BACKUP OPTION
*
*
```

```
*************************************************************
* TERMINATE DESCRIPTION - END OF NSF STAGE 1 SOURCE *
*************************************************************
*
*
          ENSNEND
*
          END
*
```

ATTACHMENT II

```
*   +----------------------------------------------------------+   *
*   +----------------------  XI Generation  --------------------+   *
*   +----------------------------------------------------------+   *
*   ---------- : Start of Process     Date : 07/25/89 Time : 13:24:10 *
*   -------------------------------------------------------------- *
*   ----------      AUTOMATIC XI-Stage1 in PROGRESS      ----------  *
*   -------------------------------------------------------------- *
*   -----        Entity being built:    XI Title (NODE X01)     -----  *
*   ----------        Entity being built:  EXIGGEN Macro   ----------  *
*   ----------        Entity being built:  EXIGNODE Macro  ----------  *
*   ----------        Entity being built:  EXIGNMF Macro   ----------  *
*   ----------        Entity being built:  EXIGDXE Macro   ----------  *
*   ----------        Entity being built:  EXIGDTE Macro   ----------  *
*   ----------        Entity being built:  EXIGDTEA Macro  ----------  *
*   ----------        Entity being built:  EXIGDTES Macro  ----------  *
*   ----------        Entity being built:  EXIGPVC Macro   ----------  *
*   ----------        Entity being built:  EXIGDC Macro    ----------  *
*   ----------        Entity being built:  EXIGROUT Macro  ----------  *
*   ----------        Entity being built:  EXIGEND Macro   ----------  *
*   -----      Member has been created :   A1XI1GB2 XIGEXAMP G-----  *
*   -------------------------------------------------------------- *
*   ----------      AUTOMATIC XI-Stage1 ENDED      ----------  *
*   -------------------------------------------------------------- *
*   ---------- : END of Process     Date : 07/25/89  Time : 13:24:11 *
*   +----------------------------------------------------------+   *
        ===>>   Please press Enter to continue. Thank you!  <<===
```

ATTACHMENT III (part1)

```
************************************************************************
*   XI DEFINITION OF NODE X01                                         *
*                                                                     *
*   ADDRESS 111 PREFIX X01 INDEX 1 SUBAREA 012                        *
************************************************************************
*
** STARTER
*
      EXIGGEN  SUBAREA=012,              .SUBAREA NUMBER OF THE NCP    X
               MWMNOTE=NO,               .NO WARNING FOR MISSING DATA  X
               SUFFIX=1                  .OUTPUT MEMBERS SUFFIX
        EJECT
*
************************************************************************
*                                                                     *
*   XI NETWORK LEVEL DESCRIPTION                                      *
*                                                                     *
************************************************************************
*
      EXIGNODE INDEX=1,              .NODE INDEX                        X
               SUBAREA=012,          .NODE SUBAREA                      X
               PREFIX=X01,           .NODE PREFIX                       X
               MODEL=3725,                      .CONTROLLER MODEL       X
               ADDRESS=111,          .XI ADDRESS ASSIGNED TO THIS NODE  X
               RAP=8,                .RELATIVE ADDRESS PREFIX           X
               XAP=7,                .X121 ADDRESS PREFIX               X
               Q=3,                  .NODE ADDRESS DIGIT COUNT          X
               P=4,                  .DTE ADDRESS DIGIT COUNT           X
               N=1,                  .SUBADDRESS DIGIT COUNT            X
               NETWORK=STANDARD,     .NATURE OF CLEARING CAUSE HANDLING X
               START=AUTO,           .NODE AUTOMATIC ACT. AT NSF STARTUP X
               DTEMAX=(,,,,,1,,,,,,,,,),    .DTE CNT BY CONNECT. CLASS X
               DXECT=1,              .DXE COUNT                         X
               PVC=(0,3),            .NUMBER OF PVC ENDING IN THE NODE  X
               DC=(0,0),             .NUMBER OF DC ENDING IN THE NODE   X
               SVC=(5,0,0)           .NUMBER OF SVC AT SAME TIME
*
************************************************************************
*   NETWORK MANAGEMENT FUNCTION                                       *
************************************************************************
*
      EXIGNMF  ACBNAME=A001NSF,      .SUBNETWORK NSF ACB NAME           X
               PASSWRD=XIONLY        .NSF SESSION PASSWORD
*
************************************************************************
*   DXE FUNCTION                                                      *
************************************************************************
*
X01UX02S  EXIGDXE INDEX=2,              .PARTNER NODE INDEX             X
               DEST=(X02,222),          .PARTNER NODE(PREFIX,XI ADDR)   X
               PASSWRD=XIONLY,          .INITSELF PASSWORD              X
               PLUNAME=X02UX01S,        .PARTNER PLU NAME               X
               MODETAB=DXETAB,          .LOGON MODE TABLE               X
               LOGMOD=DXELU,            .LOGON MODE NAME                X
               LCCOUNT=4,               .USABLE LC COUNT                X
               BAND=819175,             .BANDWIDTH                      X
               TRANSIT=5000             .TRANSIT DELAY
```

28

```
        EJECT
*
**************************************************************************
*   DTE FUNCTION                                                         *
**************************************************************************
*
        EXIGDTE TYPE=DTE,                .LINK TYPE (DTE GW NPSI)         X
                INDEX=1,                 .LINK SEQUENCE NUMBER BY TYPE    X
                ADDRESS=4320,            .XI DTE ADDRESS                  X
                CLASS=5,                 .CONNECTION CLASS                X
                SPEED=19200              .LINE SPEED
*
**************************************************************************
*   DTE FUNCTION - ATTACHMENT PARAMETERS                                 *
**************************************************************************
*
        EXIGDTEA TYPE=DTE,               .LINK TYPE (GW,DTE)             X
                 INDEX=1,                .LINK SEQUENCE NUMBER BY TYPE   X
                 LADDR=17,               .RELATIVE LINE NUMBER           X
                 SPARE=NO,               .VTAM STATUS OF DTE LINE        X
                 SPEED=19200,            .LINE SPEED (BPS)               X
                 CLOCKNG=EXT,            .CLOCKING OR NOT                X
                 PHYLVL=X21B,            .TYPE OF PHYSICAL LINE INTERFACE X
                 ITIME=0,                .INACTIVITY TIMER               X
                 LPDATS=NO,              .LPDA SUPPORT                   X
                 LTYPE=L,                .LINE TYPE                      X
                 WMODE=NORMAL            .WORKING MODE
*
**************************************************************************
*   DTE FUNCTION - SUBSCRIPTION PARAMETERS                               *
**************************************************************************
*
        EXIGDTES TYPE=DTE,               .LINK TYPE (NPSI,GW,DTE)         X
                 ADDRESS=4320,           .XI DEVICE ADDRESS               X
                 HPVC=(0,3),             .PVC MAX LC   (HG,HN)            X
                 LTCHTC=(2,0,2,9),       .TWO WAY LC RANGE                X
                 FCPNEGO=NO,             .FLOW CONTROL PARAM NEGOTIATION X
                 PKTSIZE=(128,128),      .DEFAULT PACKET SIZE             X
                 MODULO=8,               .PACKET SEQUENCE NUMBERING       X
                 WINDOW=(2,2),           .PACKET WINDOW SIZE I/O          X
                 THRUPUT=(19200,19200),  .DEFAULT THRUPUT CLASS I/O       X
                 V=80,                   .XI VERSION                      X
                 K=7,                    .FRAME WINDOW SIZE               X
                 T1=30,                  .RETRANSMIT TIMER                X
                 N2=10,                  .RETRY COUNT                     X
                 T2=0                    .PIGGYBACKING TIMER
        EXIGPVC  ADDRESS=4320,           .XI DEVICE ADDRESS               X
                 LC=(0,1),               .LC NUMBER (GN,LCN)              X
                 PRIMARY=YES,            .PRIMARY LC (YES/NO)             X
                 DADDR=82220230,         .PARTNER XI ADDRESS              X
                 PLC=(0,3)               .PARTNER LC NUMBER (GN,LCN)
        EXIGPVC  ADDRESS=4320,           .XI DEVICE ADDRESS               X
                 LC=(0,2),               .LC NUMBER (GN,LCN)              X
                 PRIMARY=YES,            .PRIMARY LC (YES/NO)             X
                 DADDR=82220230,         .PARTNER XI ADDRESS              X
                 PLC=(0,1)               .PARTNER LC NUMBER (GN,LCN)
        EXIGPVC  ADDRESS=4320,           .XI DEVICE ADDRESS               X
                 LC=(0,3),               .LC NUMBER (GN,LCN)              X
                 PRIMARY=NO,             .PRIMARY LC (YES/NO)             X
                 DADDR=82220230,         .PARTNER XI ADDRESS              X
                 PLC=(0,2)               .PARTNER LC NUMBER (GN,LCN)
*
**************************************************************************
```

```
*  ·ROUTING FUNCTION - TYPE = NODE                                            *
***************************************************************************
*
        EXIGROUT TYPE=NODE,          .ROUTING TYPE (X121/NODE)          X
                 ADDRESS=222,        .DESTINATION ADDRESS               X
                 (2,1)               .VC PATH INDICES  (HIGHEST,LOWEST)
        EJECT
*
***************************************************************************
*                                  TERMINATOR                            *
***************************************************************************
*
        EXIGEND
        END
```

ATTACHMENT III (part2)

```
*****************************************************************
*                                                               *
*                                                               *
*                 XI Node Description Table                     *
*                 =============================                 *
*                                                               *
*   The CMS Definitions (Fn/Ft/Fm) of this XNDT are the following: *
*                                                               *
*         Fn = xxXNDTvv    !   xx = Prefix associated to the    *
*                          !        Host Subarea                *
*                          ! XNDT = MANDATORY Character Chain   *
*                          !   vv = Suffix associated to the    *
*                          !        XI Node Subarea             *
*                                                               *
*         Ft =  XIGzz      ! XIG = MANDATORY Character Chain     *
*                          !  zz = Customer envirronment        *
*                                                               *
*                                                               *
*                                                               *
*         Fm = Customer identifier                              *
*                                                               *
*                                                               *
*****************************************************************
*                                                               *
*   NODE GENERAL INFORMATIONS :                                 *
*   ============================                                *
*                                                               *
*   -A-  PANELS ( RA70XIAE,RA70XIBE,RA70XICE,RA7020CE,RA7045CE ) *
*                                                               *
*...+....1....+....2....+....3....+....4....+....5....+....6....+....*
*                                                               *
*-A70XIA :     NODE SA =___           MAX LC =____              *
*-A70XIB :     NODE ADDR =_____     HOST SA =___             *
*-A70XIB :     NSF AUTO =_            GEN LVL =_                *
*-A70XIB :     NEW NAME =_____      NSF ACB =_____          *
*-A70XIB :     NODE PFX =___                                    *
*-A70XIC :     MODEL1 =_              NSF VR =__                *
*-A70XIC :     MODTAB =_____         LOGMOD =_____           *
*-A7020C :     MODEL2 =_              USGTIER =_               *
*-A7045C :     USGTIER =_                                       *
*                                                               *
*****************************************************************
*****************************************************************
*                                                               *
*                                                               *
* A70XIA  :    NODE SA =012           MAX LC =3000             *
* A70XIB  :    NODE ADDR =111         HOST SA =001             *
* A70XIB  :    NSF AUTO =Y            GEN LVL =1                *
* A70XIB  :    NEW NAME =USELESS      NSF ACB =A001NSF          *
* A70XIB  :    NODE PFX =X01                                    *
* A70XIC  : ·  MODEL1 =3              NSF VR =12               *
* A70XIC  :    MODTAB =DXETAB         LOGMOD =DXELU            *
* A7020C  :    MODEL2 =_              USGTIER =_               *
* A7045C  :    USGTIER =_                                       *
*                                                               *
*                                                               *
*****************************************************************
```

```
* .                                                                    *
*    DTE INFORMATIONS :                                                *
*    ==================                                                *
*                                                                      *
*    -B-  PANELS ( RA70XIDE,RA70XIEE,RA70XIFE,RA70XIGE )               *
*                                                                      *
*...+....1....+....2....+....3....+....4....+....5....+....6....+....*
*                                                                      *
*-DTE_IX =___                                                          *
*-A70XID :    REAL ADDR =_____        DTE MAX =__                   *
*-A70XID :    DTE ADDR =_____         DTE LADDR =_____           *
*-A70XID :    SPEED =_____               CLOCKING =_                   *
*-A70XID :    LPDA =_                    SPARE =_                       *
*-A70XID :    PHY LVL =____              CLASS =__                      *
*-A70XIE :    K =_     T1 =__   N2 =__    Ti =___        T2 =__         *
*-A70XIE :    LTYPE =_        WORK MOD =_                               *
*-A70XIF :    VERSION =_                 PACK MOD =_                    *
*-A70XIF :    WD SIZE IN =__             WD SIZE OUT =__                *
*-A70XIF :    PACK SIZE IN =_            PACK SIZE OUT =_   PARNEG =_   *
*-A70XIF :    THRUPUT IN =__             THRUPUT OUT =__                *
*-A70XIG :    PVC GP =__                 PVC CNT =___                   *
*-A70XIG :    LPVC GP =__                LPVC CNT =___                  *
*-A70XIG :    HPVC GP =__                HPVC CNT =___                  *
*-A70XIG :    SVC INC GP =__             SVC INC CNT =___               *
*-A70XIG :    LSVC INC GP =__            LSVC INC CNT =___              *
*-A70XIG :    HSVC INC GP =__            HSVC INC CNT =___              *
*-A70XIG :    SVC TW GP =__              SVC TW CNT =___                *
*-A70XIG :    LSVC TW GP =__             LSVC TW CNT =___               *
*-A70XIG :    HSVC TW GP =__             HSVC TW CNT =___               *
*-A70XIG :    SVC OT GP =__              SVC OT CNT =___                *
*-A70XIG :    LSVC OT GP =__             LSVC OT CNT =___               *
*-A70XIG :    HSVC OT GP =__             HSVC OT CNT =___               *
*                                                                      *
**********************************************************************
**********************************************************************
*                                                                      *
*                                                                      *
*                                                                      *
* DTE_IX =1                                                            *
* A70XID :    REAL ADDR =1114320         DTE MAX =256                  *
* A70XID :    DTE ADDR =4320             DTE LADDR =17                 *
* A70XID :    SPEED =19200               CLOCKING =2                   *
* A70XID :    LPDA =2                    SPARE =N                      *
* A70XID :    PHY LVL =X21B              CLASS =5                      *
* A70XIE :    K =7     T1 =30   N2 =10    Ti =0          T2 =0         *
* A70XIE :    LTYPE =1        WORK MOD =1                              *
* A70XIF :    VERSION =1                 PACK MOD =1                   *
* A70XIF :    WD SIZE IN =2              WD SIZE OUT =2                *
* A70XIF :    PACK SIZE IN =2            PACK SIZE OUT =2   PARNEG =N  *
* A70XIF :    THRUPUT IN =9              THRUPUT OUT =9                *
* A70XIG :    PVC GP =0                  PVC CNT =3                    *
* A70XIG :    LPVC GP =0                 LPVC CNT =1                   *
* A70XIG :    HPVC GP =0                 HPVC CNT =3                   *
* A70XIG :    SVC INC GP =_              SVC INC CNT =_                *
* A70XIG :    LSVC INC GP =_             LSVC INC CNT =_               *
* A70XIG :    HSVC INC GP =_             HSVC INC CNT =_               *
* A70XIG :    SVC TW GP =2               SVC TW CNT =10                *
* A70XIG :    LSVC TW GP =2              LSVC TW CNT =0                *
* A70XIG :    HSVC TW GP =2              HSVC TW CNT =9                *
* A70XIG :    SVC OT GP =_               SVC OT CNT =_                 *
* A70XIG :    LSVC OT GP =_              LSVC OT CNT =_                *
* A70XIG :    HSVC OT GP =_              HSVC OT CNT =_                *
*                                                                      *
*                                                                      *
```

```
****************************************************************
*                                                              *
*   GW INFORMATIONS :                                          *
*   =================                                          *
*                                                              *
*    -C-  PANELS ( RA70XIHE,RA70XIIE,RA70XIJE,RA70XIKE )       *
*                                                              *
*...+....1....+....2....+....3....+....4....+....5....+....6....+....*
*                                                              *
*-GW_IX =___                                                   *
*-A70XIH :    REAL ADDR =_____                              *
*-A70XIH :    GW ADDR =_____        GW LADDR =_____       *
*-A70XIH :    SPEED =_____             CLASS =__               *
*-A70XII :    K =_      T1 =__   N2 =__    Ti =___     T2 =__   *
*-A70XIJ :    VERSION =_               PACK MOD =_             *
*-A70XIJ :    WD SIZE IN =__           WD SIZE OUT =__          *
*-A70XIJ :    PACK SIZE IN =_          PACK SIZE OUT =_   PARNEG =_ *
*-A70XIJ :    THRUPUT IN =__           THRUPUT OUT =__         *
*-A70XIK :    SVC TW GP =__            SVC TW CNT =___          *
*-A70XIK :    LSVC TW GP =__           LSVC TW CNT =___         *
*-A70XIK :    HSVC TW GP =__           HSVC TW CNT =___         *
*-A70XIK :    ADDR PFX =_                                      *
*-A70XIK :    ADJ_PSDN =_____       ADJ_DNIC =____          *
*                                                              *
****************************************************************
****************************************************************
*                                                              *
*                                                              *
*                                                              *
****************************************************************
*                                                              *
*   NPSI INFORMATIONS :                                        *
*   ==================                                         *
*                                                              *
*    -D-  PANELS ( RA70XILE,RA70XIME,RA70XINE )                *
*                                                              *
*...+....1....+....2....+....3....+....4....+....5....+....6....+....*
*                                                              *
*-NPSI_IX =___                                                 *
*-A70XIL :    REAL ADDR =_____                              *
*-A70XIL :    NPSI ADDR =_____      CLASS =__               *
*-A70XIM :    VERSION =_                                       *
*-A70XIM :    WD SIZE IN =__           WD SIZE OUT =__          *
*-A70XIN :    PVC GP =__               PVC CNT =___            *
*-A70XIN :    LPVC GP =__              LPVC CNT =___           *
*-A70XIN :    HPVC GP =__              HPVC CNT =___           *
*-A70XIN :    SVC INC GP =__           SVC INC CNT =___        *
*-A70XIN :    LSVC INC GP =__          LSVC INC CNT =___       *
*-A70XIN :    HSVC INC GP =__          HSVC INC CNT =___       *
*-A70XIN :    SVC TW GP =__            SVC TW CNT =___          *
*-A70XIN :    LSVC TW GP =__           LSVC TW CNT =___         *
*-A70XIN :    HSVC TW GP =__           HSVC TW CNT =___         *
*-A70XIN :    SVC OT GP =__            SVC OT CNT =___          *
*-A70XIN :    LSVC OT GP =__           LSVC OT CNT =___         *
*-A70XIN :    HSVC OT GP =__           HSVC OT CNT =___         *
*                                                              *
****************************************************************
****************************************************************
*                                                              *
*                                                              *
****************************************************************
****************************************************************
*                                                              *
*   MORE INFORMATIONS :                                        *
```

```
*  · ===================                                       *
*                                                              *
*    -E-  ( DTE , GW and NPSI informations )                   *
*                                                              *
*...+....1....+....2....+....3....+....4....+....5....+....6....+....* ·
*                                                              *
*-EXTRA  :      DTE CNT CL0 =___                               *
*-EXTRA  :      DTE CNT CL1 =___                               *
*-EXTRA  :      DTE CNT CL2 =___                               *
*-EXTRA  :      DTE CNT CL3 =___                               *
*-EXTRA  :      DTE CNT CL4 =___                               *
*-EXTRA  :      DTE CNT CL5 =___                               *
*-EXTRA  :      DTE CNT CL6 =___                               *
*-EXTRA  :      DTE CNT CL7 =___                               *
*-EXTRA  :      DTE CNT CL8 =___                               *
*-EXTRA  :      DTE CNT CL9 =___                               *
*-EXTRA  :      DTE CNT CL10 =___                              *
*-EXTRA  :      DTE CNT CL11 =___                              *
*-EXTRA  :      DTE CNT CL12 =___                              *
*-EXTRA  :.     DTE CNT CL13 =___                              *
*-EXTRA  :      DTE CNT CL14 =___                              *
*-EXTRA  :      LC CNT =___                                    *
*-EXTRA  :      PVC CNT =___                                   *
*                                                              *
****************************************************************
****************************************************************
*                                                              *
*                                                              *
****************************************************************
* EXTRA  :      DTE CNT CL0 =0                                 *
* EXTRA  :      DTE CNT CL1 =0                                 *
* EXTRA  :      DTE CNT CL2 =0                                 *
* EXTRA  :      DTE CNT CL3 =0                                 *
* EXTRA  :      DTE CNT CL4 =0                                 *
* EXTRA  :      DTE CNT CL5 =1                                 *
* EXTRA  :      DTE CNT CL6 =0                                 *
* EXTRA  :      DTE CNT CL7 =0                                 *
* EXTRA  :      DTE CNT CL8 =0                                 *
* EXTRA  :      DTE CNT CL9 =0                                 *
* EXTRA  :      DTE CNT CL10 =0                                *
* EXTRA  :      DTE CNT CL11 =0                                *
* EXTRA  :      DTE CNT CL12 =0                                *
* EXTRA  :      DTE CNT CL13 =0                                *
* EXTRA  :      DTE CNT CL14 =0                                *
* EXTRA  :      LC COUNT =13                                   *
* EXTRA  :      PVC COUNT =3                                   *
*                                                              *
*        .                                                     *
****************************************************************
****************************************************************
****************************************************************
****************************************************************
****************************************************************
****************************************************************
****************************************************************
*                                                              *
* END XI Node Definition                                       *
*                                                              *
****************************************************************
```

FIG.1

X.25 SNA INTERCONNECT

FIG.2

FIG.3

SNA HOST

NSF

37XX

PARTNER XI NODE

NMF
(1)

X.25
DTE

DCE
(2)

DXE
(3)

DXE

PSDN

XI

XI

D
C
E

GW-
DTE
(4)

NPSIB
(5)

NPSI

SNA HOST

SNA HOST
APPLICATION

FIG.4

CUSTOMER
DESCRIPTION
TABLE
(XCT)

NSF HOST
DESCRIPTION
TABLE
(XHDT)

XI NODE
DESCRIPTION
TABLE
(XNDT)

FIG.5

Custname = nnnnnnnn                Custmode = m

XCT     Fn = nnnnnnnn    Ft = XIGaaaaa    Fm = m
        Fn = nnnnnnnn    Ft = XIG. . . . .    Fm = m
        Fn = nnnnnnnn    Ft = XIGeeeee    Fm = m

XHDT    Fn = xxXHDT    Ft = XIGeeeee    Fm = m
        Fn = . .XHDT    Ft = XIGeeeee    Fm = m
        Fn = zzXHDT    Ft = XIGeeeee    Fm = m

XNDT    Fn = zzXHDTrr    Ft = XIGeeeee    Fm = m
        Fn = zzXHDT. .    Ft = XIGeeeee    Fm = m
        Fn = zzXHDTnn    Ft = XIGeeeee    Fm = m

# FIG.6

PANELS AND HELPS

USER DIALOG :

.DATA PROMPTING
.NETWORK LEVEL
   VALIDATION:
   -RESOURCES
   -TOPOLOGY

INTERNAL TABLES

DEFINITIONS
   BUILDING :

.TABLES
   PROCESSING
.STATEMENTS
   CREATION

MACROS SKELETONS

NETWORK DEFINITION STATEMENTS
(MACRO -STATEMENTS)

## FIG.7

FIG.8

FIG.9

```
              ┌─────────────┐
              │    BEGIN     │
              └─────────────┘
                     │
                     ▼
        ╔═══════════════════════════╗
        ║  NETWORK INFORMATIONS·     ║
        ║  CUSTOMER ENVIRONMENT      ║
        ╚═══════════════════════════╝
                     │
                     ▼
        ┌───────────────────────────┐
        │ CUSTOMER IDENTIFICATION :  │
        │                           │
        │   - Customer name         │
        │   - Environment Id        │
        │   - Output Minidisk       │
        └───────────────────────────┘
                     │
                     ▼
              ╱─────────────╲
             ╱    Files      ╲
            ╱    already      ╲      NO
           ╱    existing       ╲──────────────────────┐
           ╲    for this       ╱                      │
            ╲   CUSTOMER      ╱                        │
             ╲      ?        ╱                         │
              ╲─────────────╱                          │
                     │                                 │
                    YES                                │
                     ▼                                 │
        ┌───────────────────────────┐                 │
        │  WAIT  LOADING Panel       │                 │
        │  loading parameters        │                 │
        │    if they are             │                 │
        │  already filed.            │                 │
        └───────────────────────────┘                 │
                     │◄────────────────────────────────┘
                     ▼
        ┌───────────────────────────┐
        │ NETWORK GENERAL ATTRIBUTES:│
        │                           │
        │  - Node digit number      │
        │  - DTE subaddress prefix  │
        │  - Relative address prefix│
        │  - X.121 address prefix   │            ┌────────┐
        │  - NSF/NMF password       │            │        │
        └───────────────────────────┘──────────▶│ XCT file│
                     │                           └────────┘
                     ▼
        ┌───────────────────────────┐
        │    Data entry             │
        │  completed Panel          │
        │  (Information)            │
        └───────────────────────────┘
                     │
                     ▼
                    to
                 Fig.10B
```

FIG.10A

44

from
Fig.10A

from
Fig.10C

**NSF
INFORMATIONS**

NSF SPECIFICATIONS :

- NSF Host subarea number

Subarea
not equal
to " "
?

NO → GO TO

to
Fig.10D

YES

Subarea
already
used for a
Host NSF
?

NO

YES

NSF processing informations :

- Reinjection is to be
done (YES or NO)

NO ← Reinjection
?

YES

Reinjection
process

**FIG.10B**

to
Fig.10C

from
Fig.10B

NSF GENERAL ATTRIBUTES :

- Operating system
- Network Manager's name
- Backup option

Backup
option
?

NO

YES

NSF BACKUP INFORMATIONS :

- Backup NetView domain Id
- Backup NSF HOST subarea

NSF GENERAL INFORMATIONS :

- NetView default operator
- Associated NetView domain
- Maximum nodes controlled
  by this NSF

NSF LOGGING INFORMATIONS :

- Logging type selection
- VTAM first file ID
- SMF identifier
- SVC number

**FIG.10C**

Data entry
completed Panel
(Information)

List of all the
files created
(information)

to
Fig.10B

NSF stage-1
and
XHDT files

from
Fig.10B

from
Fig.10J

**XI – Node
INFORMATIONS**

**GENERAL INFORMATIONS**

XI SPECIFICATIONS :

– XI Node subarea number

Subarea
not equal
to " "
?

NO

to
Fig.10L

YES

Subarea
already
used for a
XI node
?

NO

XI processing informations :

– Reinjection is to be
done (YES or NO)

NO

Reinjection
?

YES

Reinjection
process

to
Fig.10E

**FIG.10D**

from
Fig.10D

XI SPECIFICATIONS :

- XI Node address
- Owner Host NSF subarea
- Autostart by NSF (YES/NO)
- XI Node generation level

XI CONTROLLER DEFINITION :

- Controller Model

3720    Model
        ?       3745

37 | 25

XI DEFINITION FOR 3720 :

- Controller expansion
- XI Node usage tier

XI DEFINITION FOR 3745 :

- XI Node usage tier

to
Fig.10F

FIG.10E

48

FIG.10F

from
Fig.10F

Reinjection
process

**XI DTE SPECIFICATIONS (part 1) :**

- DTE address
- DTE physical link address
- Line speed
- Clocking
- LPDA support
- Spare status

**XI DTE SPECIFICATIONS (part 2) :**

- Frame window size K
- Retransmit timer T1
- Retry count N2
- Inactivity timer Ti
- RR frame delay T2
- Line type
- Working mode
- Control access point

**XI DTE SPECIFICATIONS (part 3) :**

- X25 version
- Packet modulo
- Window size
- Packet size
- Flow control parameter
  negociation

**XI DTE SPECIFICATIONS (part 4) :**

- PVC/DC logical channels
- SVC incoming logical channels
- SVC two-ways logical channels
- SVC outgoing logical channels

to
Fig.10F

# FIG.10G

from
Fig.10F

from
Fig.10I

**GW INFORMATIONS**

XI GATEWAY SPECIFICATIONS :

- GW address
- GW physical link address
- Line speed

GW
address
no equal
to " "
?

NO → to
Fig.10J

YES

GW
address
already
used for an
XI GW
?

NO

YES

NO ← Reinjection
?

YES

to
Fig.10I

# FIG.10H

from
Fig.10H

**Reinjection
process**

**XI GW SPECIFICATIONS :**

- DTE address
- DTE physical link address
- Line speed

**XI GW LINK LEVEL :**

- Frame window size K
- Retransmit timer T1
- Retry count N2
- Inactivity timer Ti
- RR frame delay T2

**XI GW PACKET LEVEL :**

- X25 version
- Packet modulo
- Window size
- Packet size
- Flow control parameter
  negociation

**LOGICAL CHANNEL SUBSCRIPTION :**

- SVC two-ways logical channels
- Address prefix translation
- PSDN DNIC
- PSDN name

**FIG.10I**

to
Fig.10H

from
Fig.10J

from
Fig.10K

NPSI INFORMATIONS

NPSI BRIDGE SPECIFICATIONS :

– DTE address

NPSI
address
not equal
to " "
?

NO

to
Fig.10D

YES

NPSI
address
already
used for a
NPSI
?

NO

YES

NO

Reinjection
?

YES

FIG.10J

to
Fig.10K

from
Fig.10J

↓

```
┌─────────────────┐
│   Reinjection   │
│    process      │
└─────────────────┘
```

↓

```
┌──────────────────────────────────────┐
│                                        │
│  NPSI BRIDGE PACKET LEVEL :            │
│                                        │
│     - X25 version                      │
│     - Window size                      │
│     - Control access point             │
│                                        │
└──────────────────────────────────────┘
```

↓

```
┌──────────────────────────────────────┐
│                                        │
│  LOGICAL CHANNEL SUBSCRIPTION :        │
│                                        │
│     - PVS/DC logical channels          │
│     - SVC incoming logical channels    │
│     - SVC two-ways logical channels    │
│     - SVC outgoing logical channels    │
│                                        │
└──────────────────────────────────────┘
```

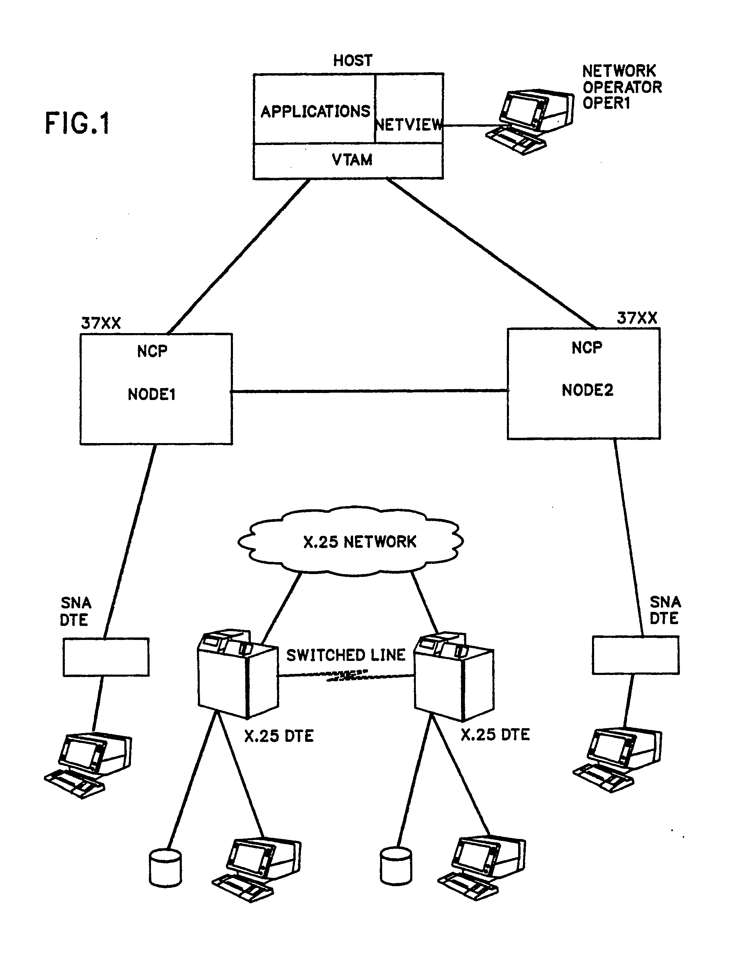

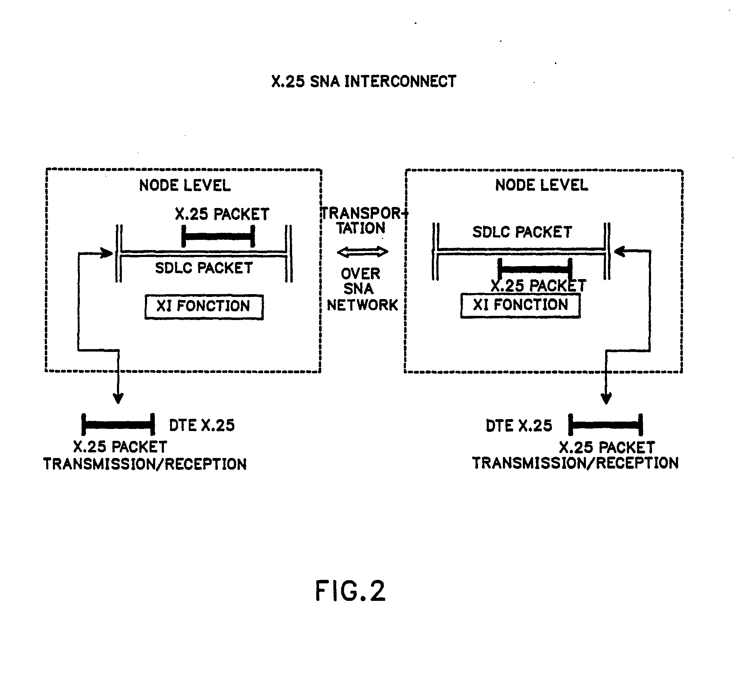

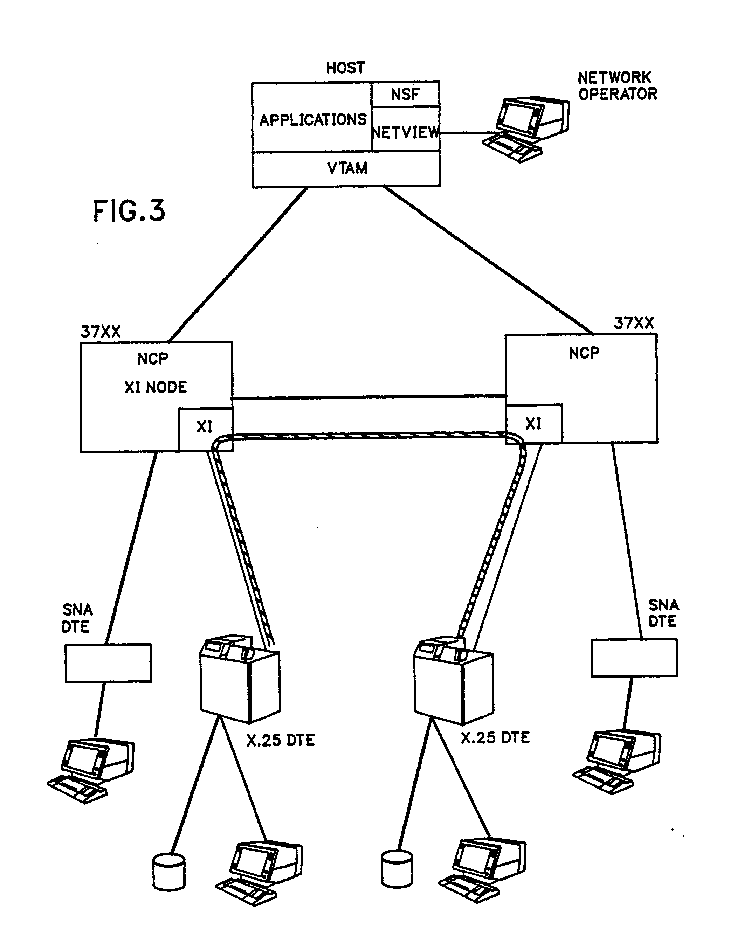

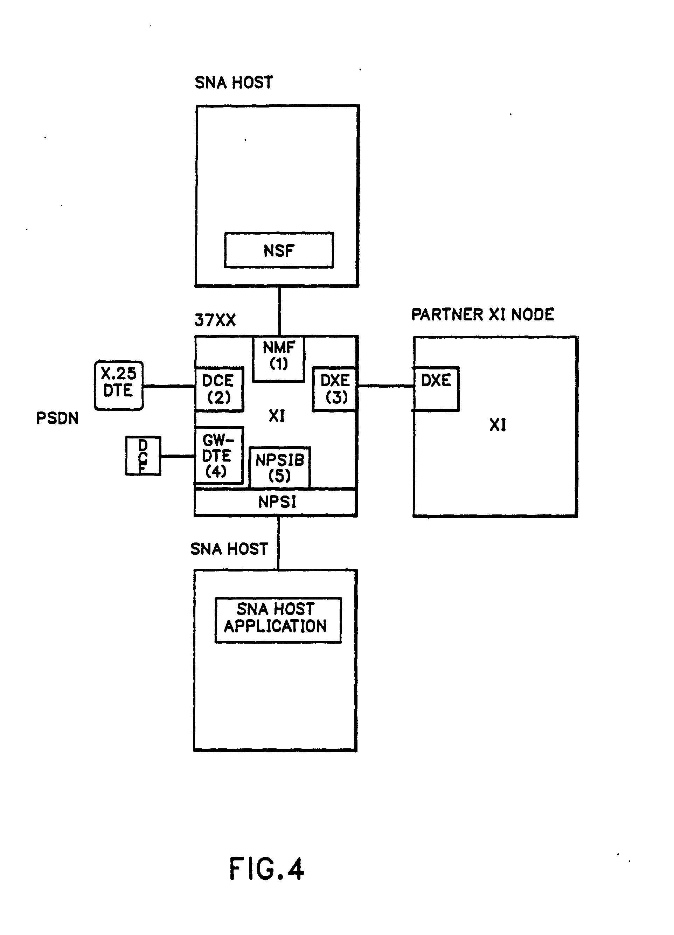

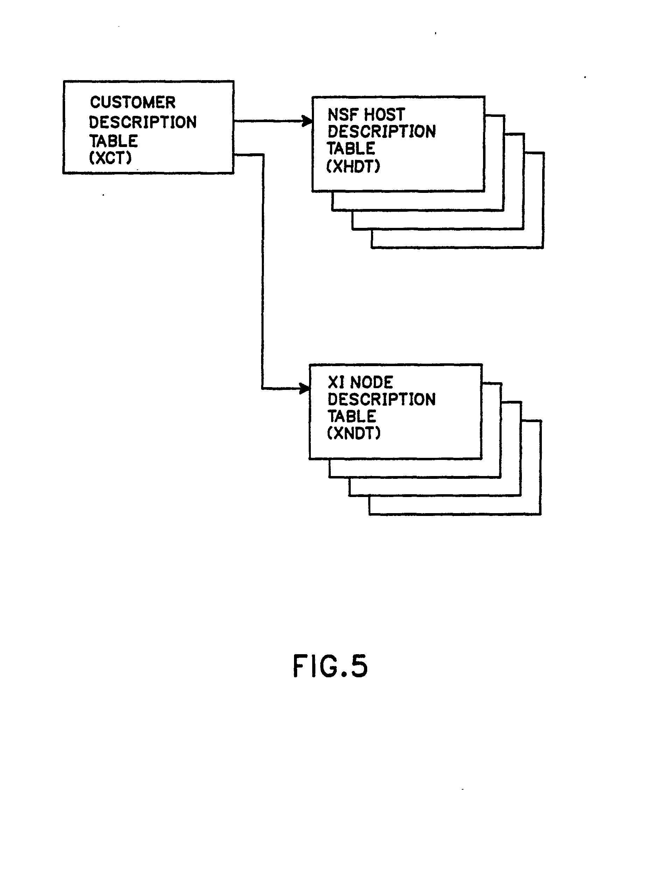

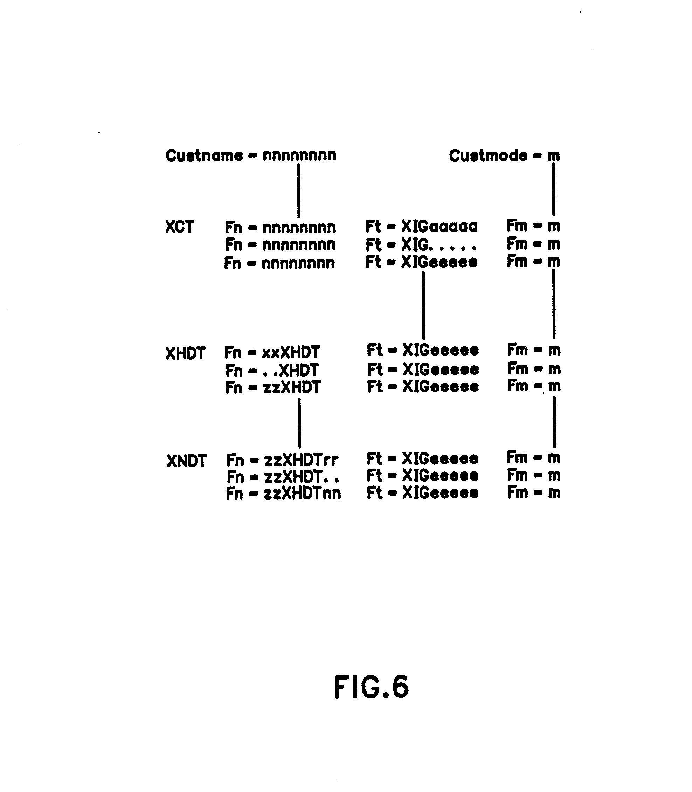

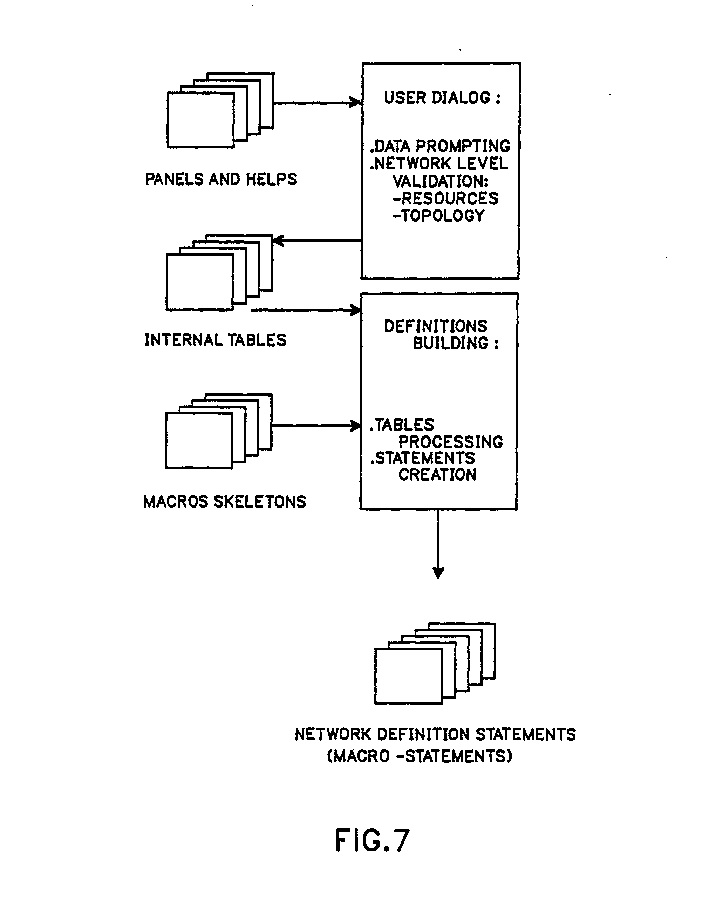

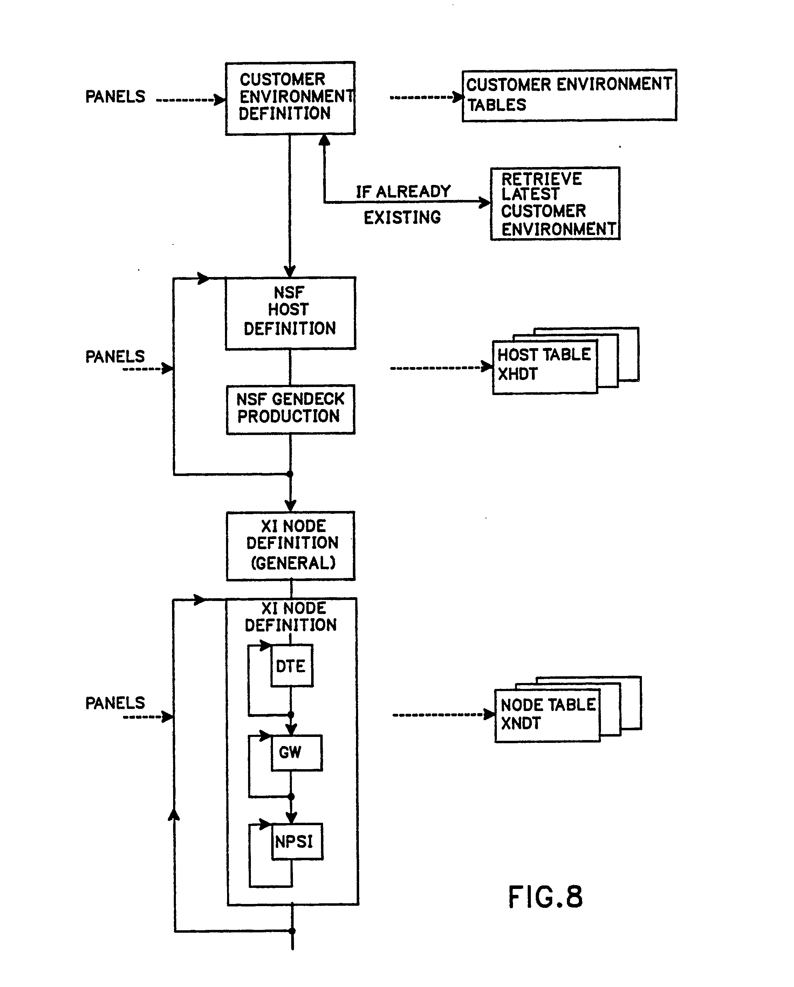

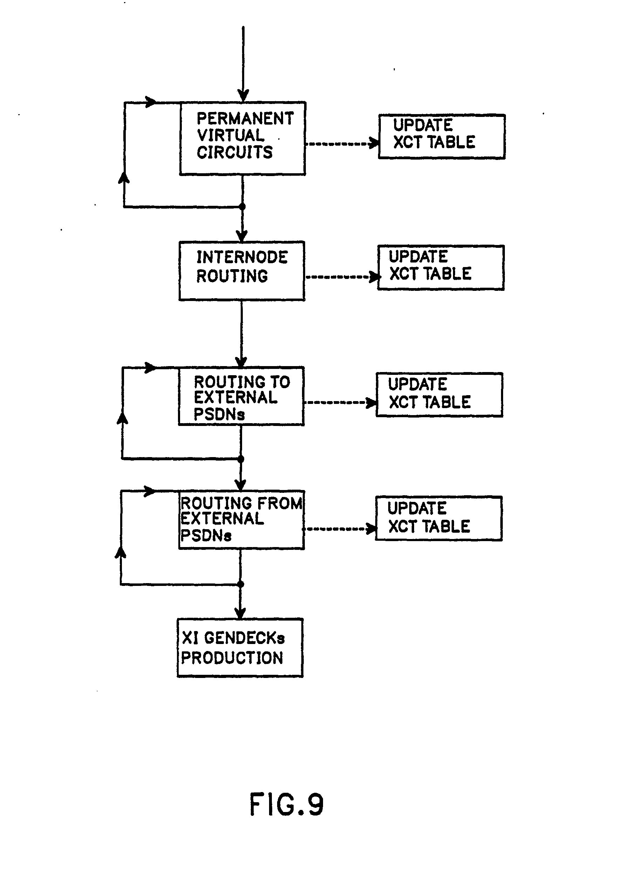

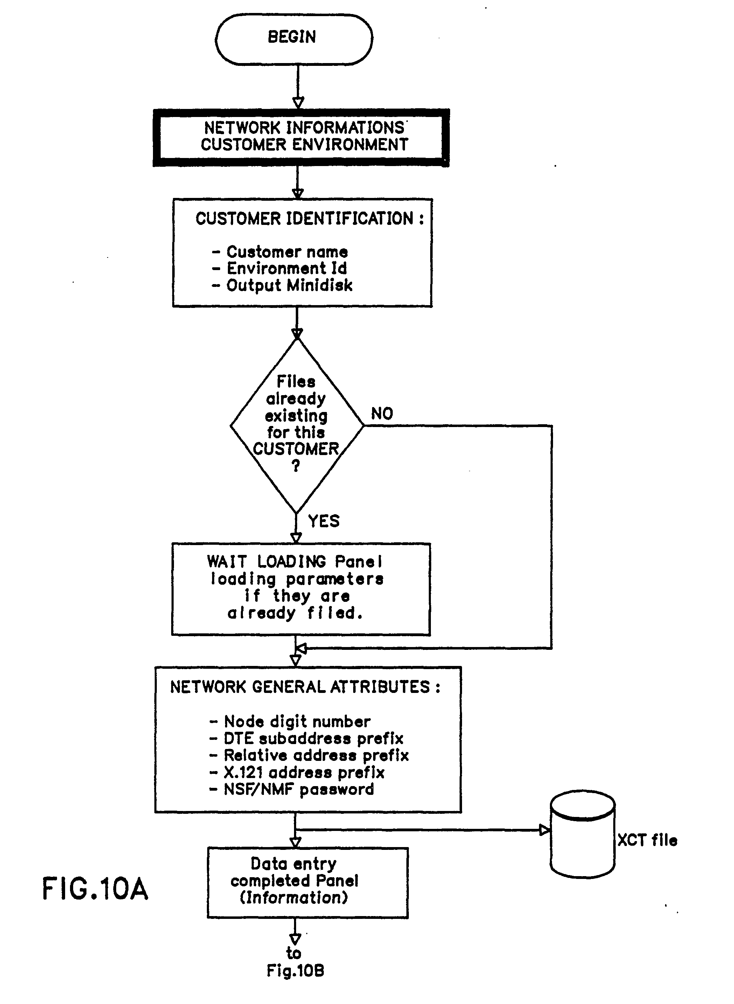

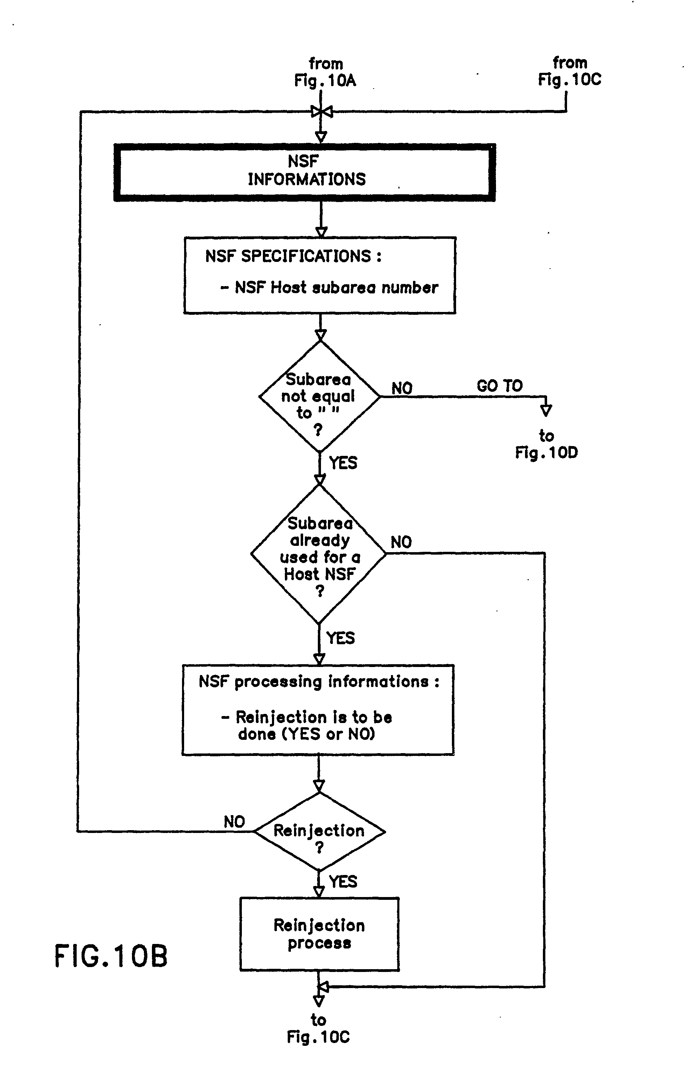

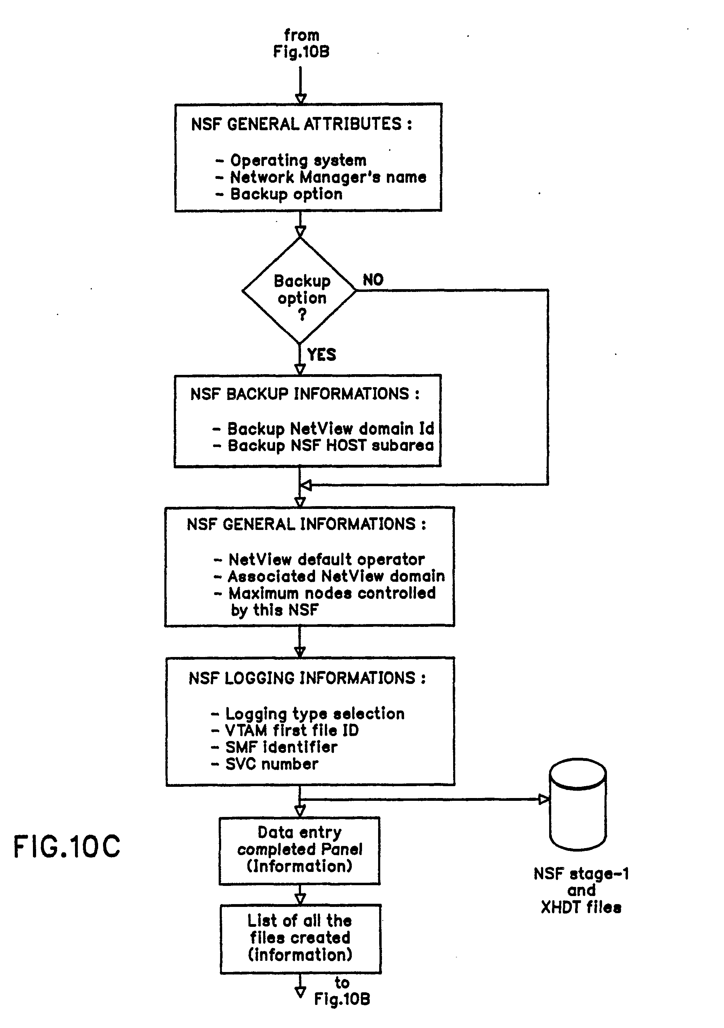

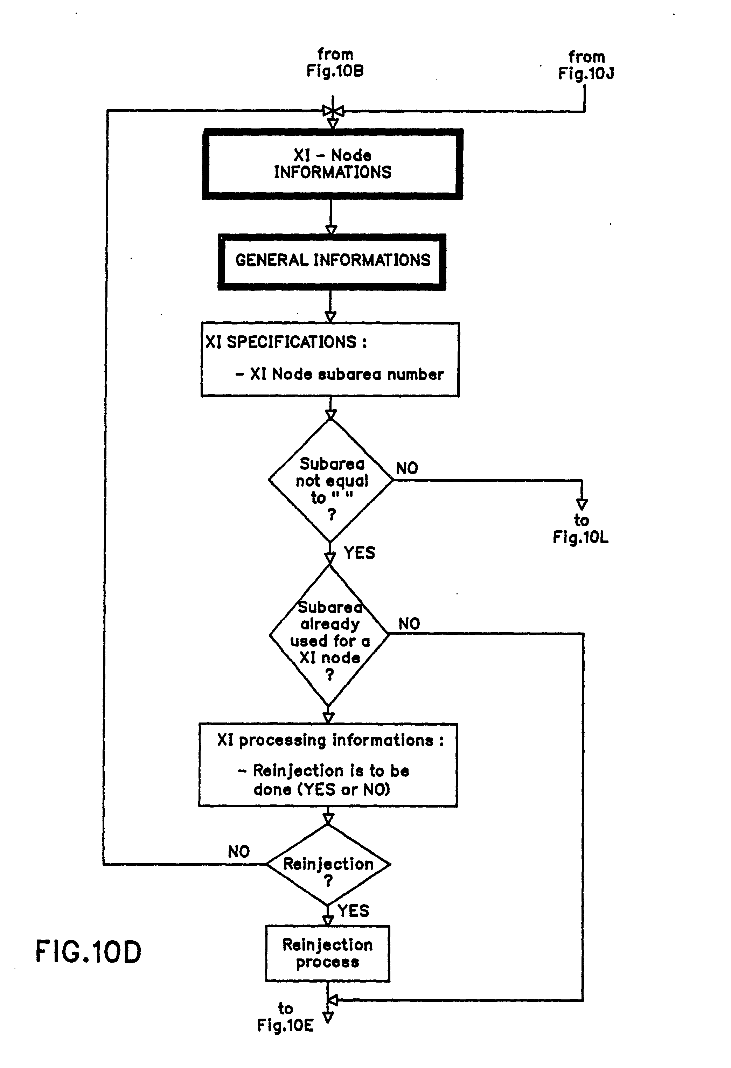

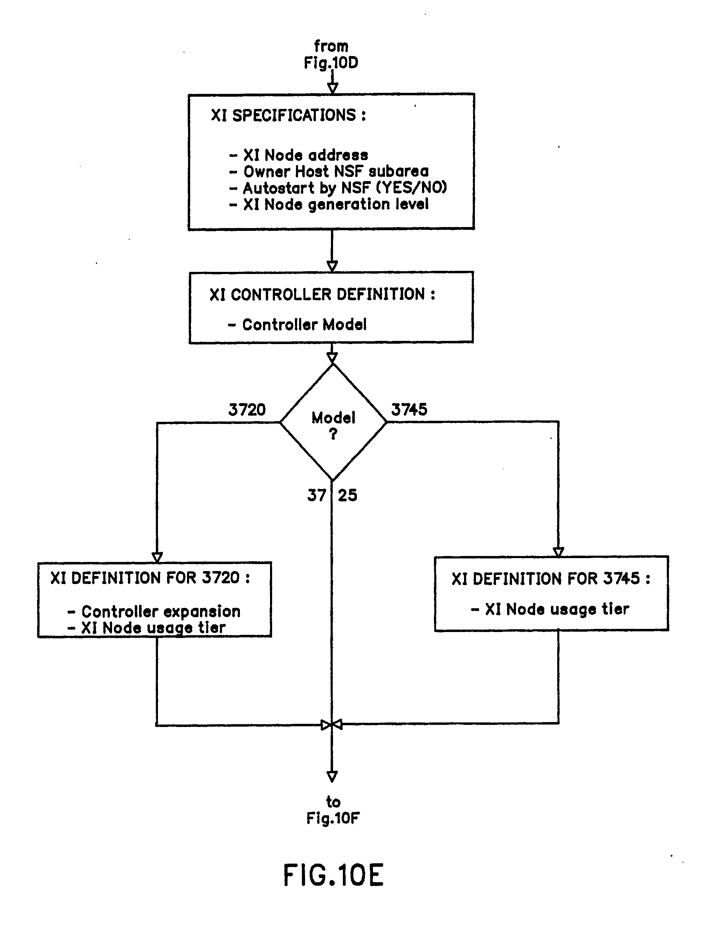

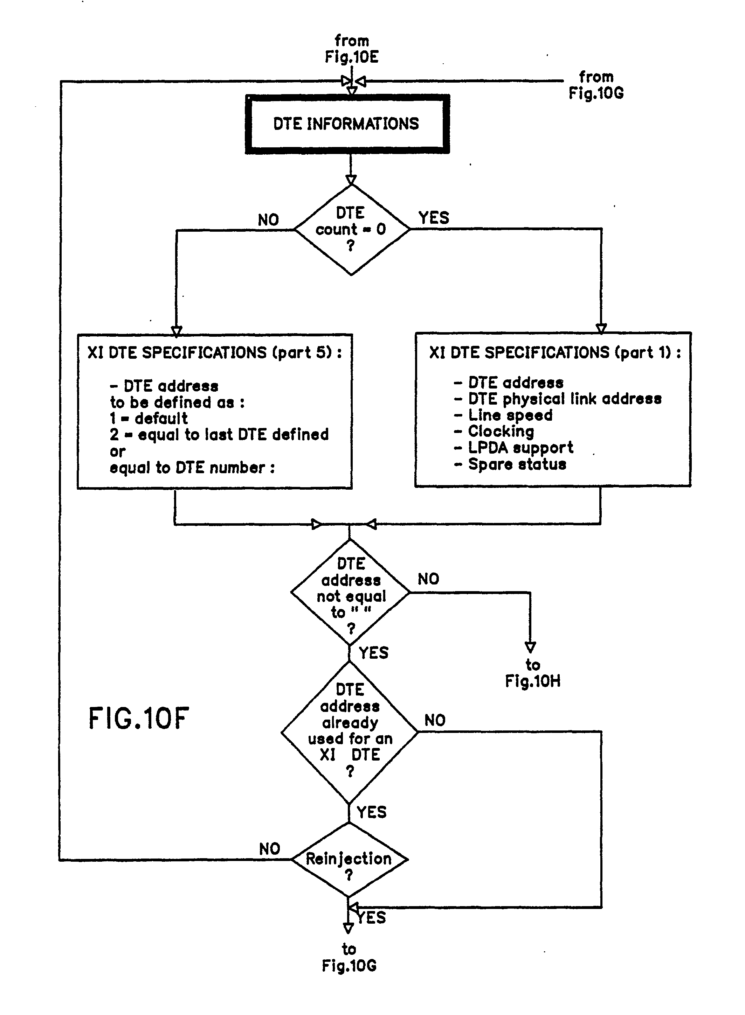

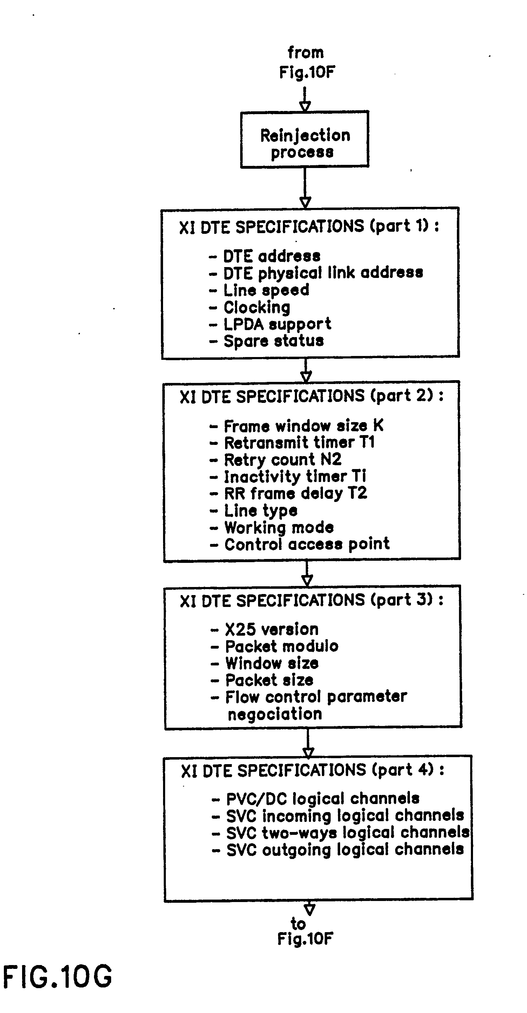

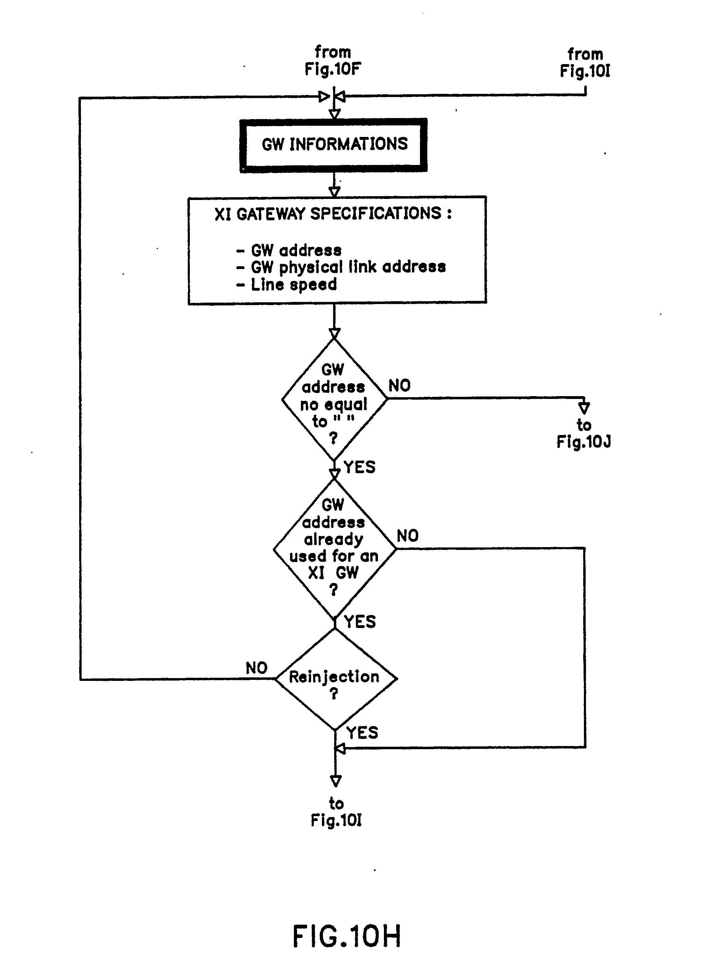

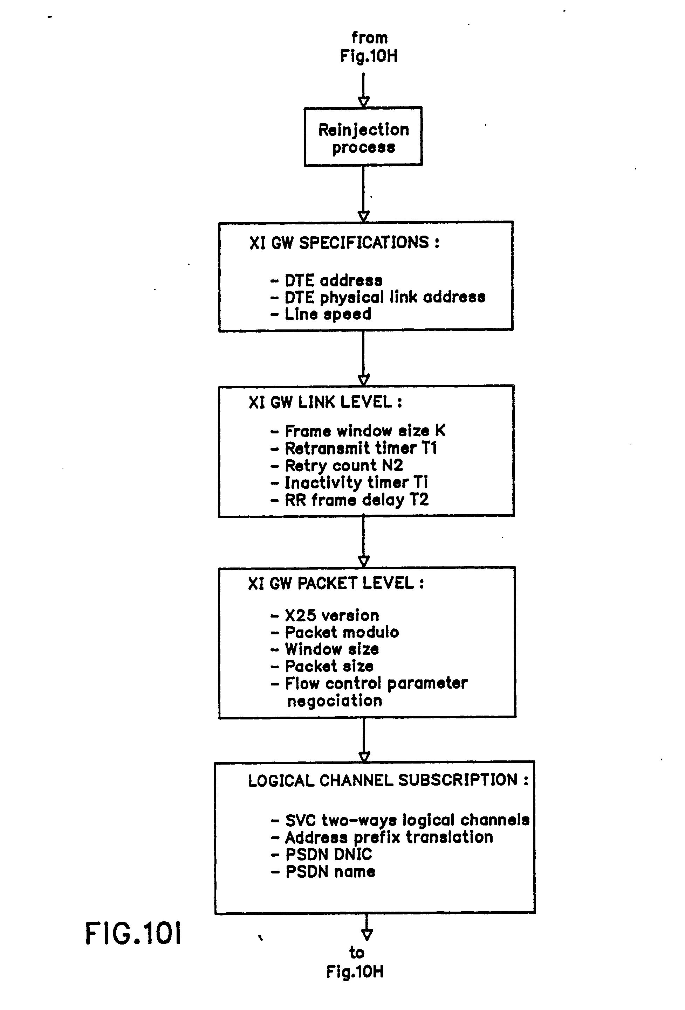

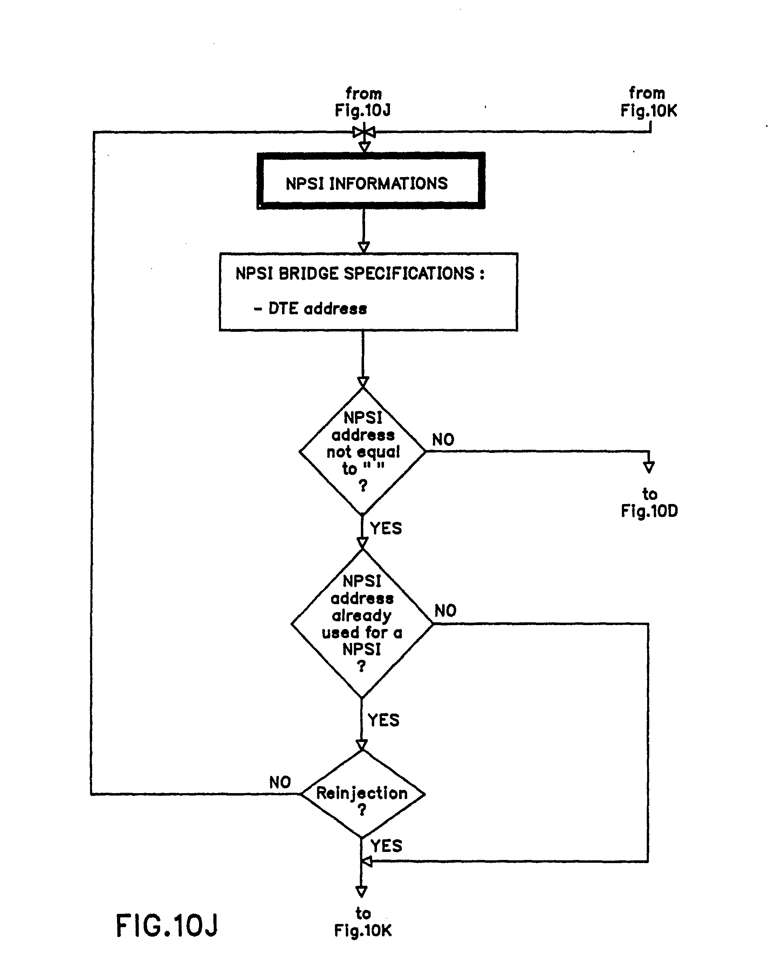

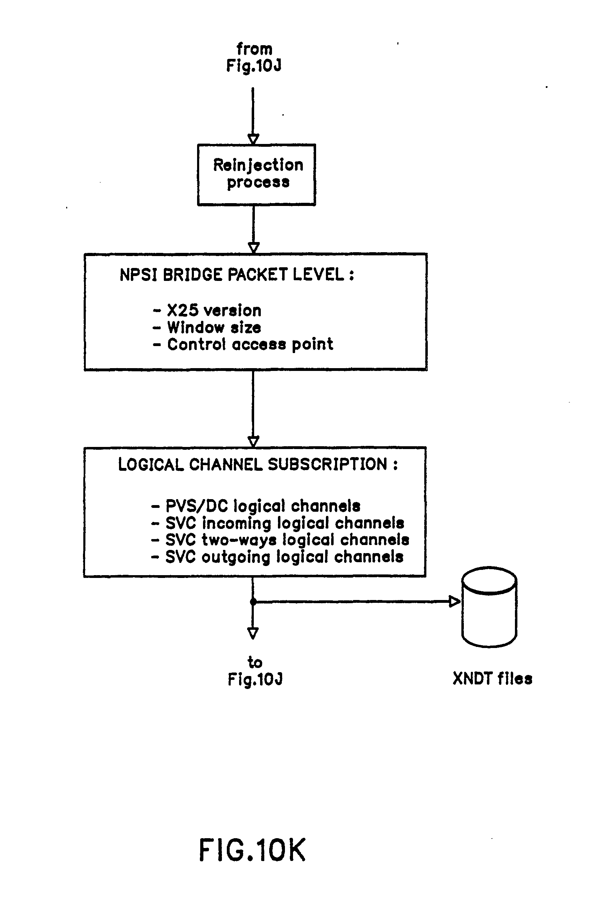

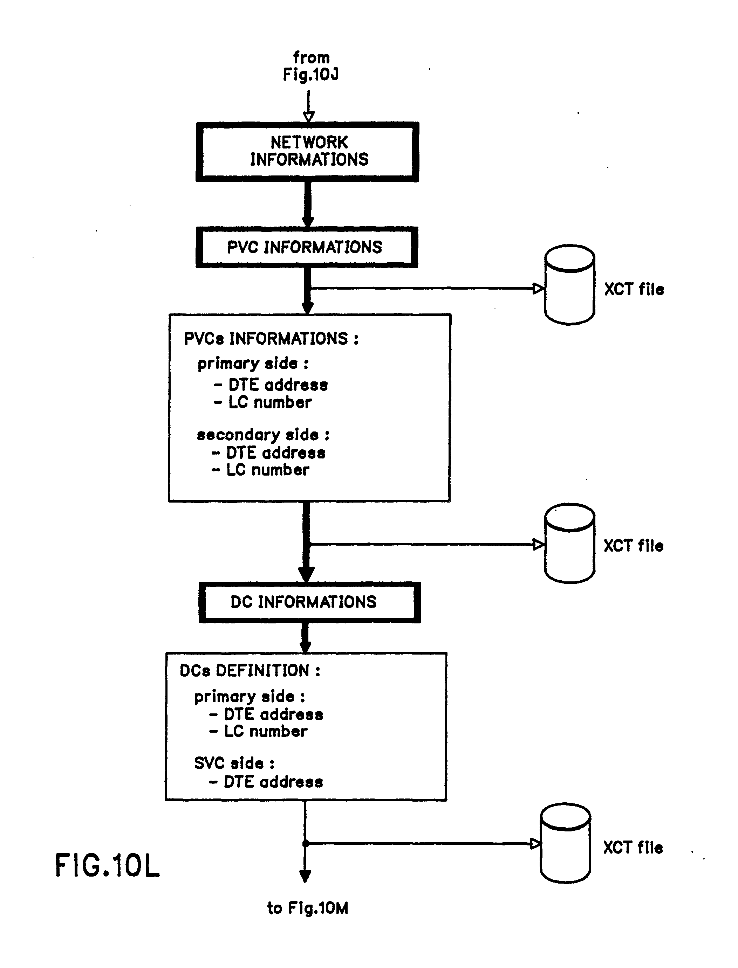

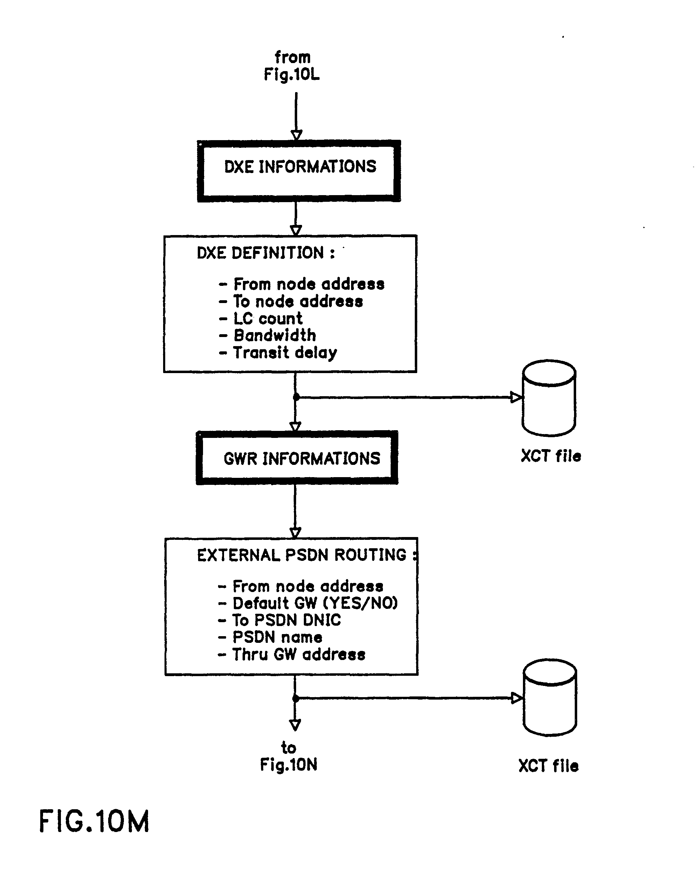

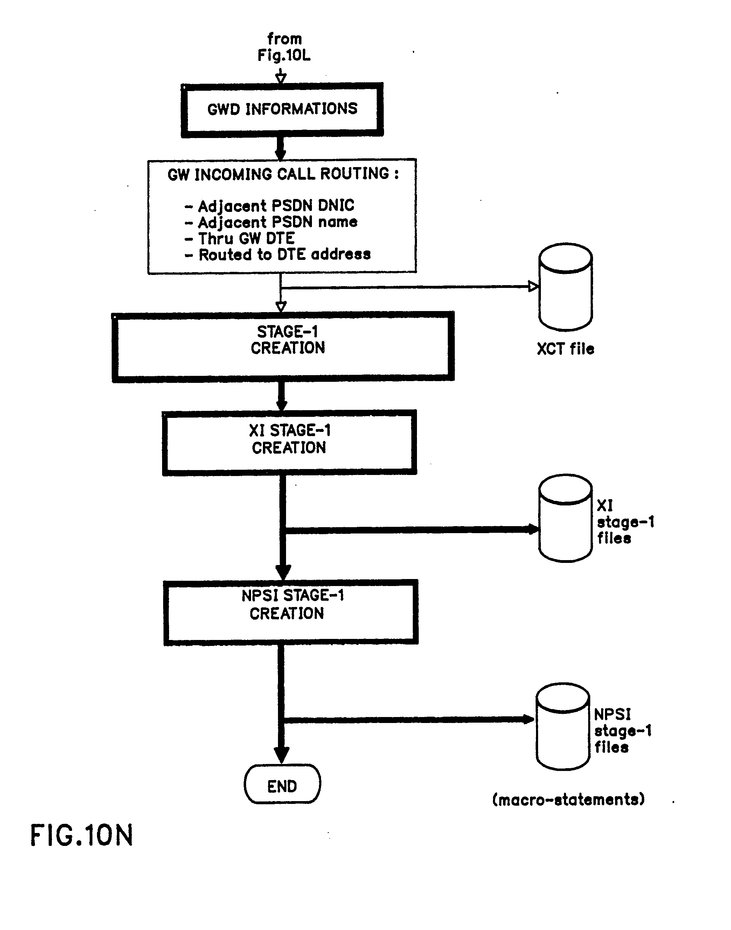

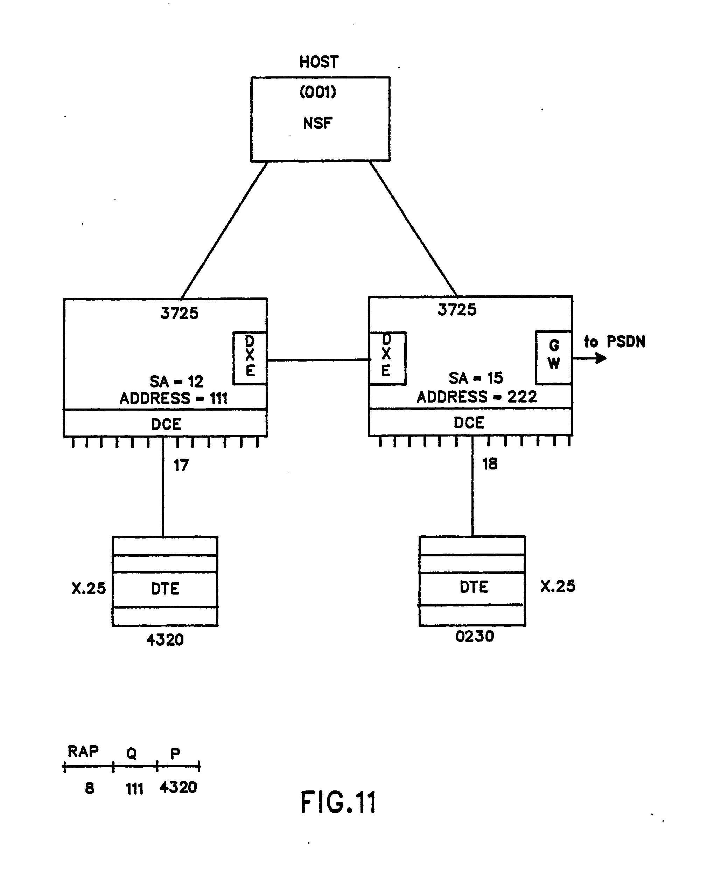

to
Fig.10J                           XNDT files

# FIG.10K

from
Fig.10J

```
┌─────────────────────┐
│      NETWORK        │
│    INFORMATIONS     │
└─────────────────────┘
           │
           ▼
┌─────────────────────┐
│  PVC INFORMATIONS   │ ──────────────────────▷ [XCT file]
└─────────────────────┘
           │
           ▼
┌─────────────────────────────────┐
│ PVCs INFORMATIONS :             │
│                                 │
│   primary side :                │
│     - DTE address               │
│     - LC number                 │
│                                 │
│   secondary side :              │
│     - DTE address               │
│     - LC number                 │
└─────────────────────────────────┘
           │
           │ ──────────────────────▷ [XCT file]
           ▼
┌─────────────────────┐
│   DC INFORMATIONS   │
└─────────────────────┘
           │
           ▼
┌─────────────────────────────────┐
│ DCs DEFINITION :                │
│                                 │
│   primary side :                │
│     - DTE address               │
│     - LC number                 │
│                                 │
│   SVC side :                    │
│     - DTE address               │
└─────────────────────────────────┘
           │
           │ ──────────────────────▷ [XCT file]
           ▼
```

**FIG.10L**

to Fig.10M

**from Fig.10L**

DXE INFORMATIONS

DXE DEFINITION :

- From node address
- To node address
- LC count
- Bandwidth
- Transit delay

XCT file

GWR INFORMATIONS

EXTERNAL PSDN ROUTING :

- From node address
- Default GW (YES/NO)
- To PSDN DNIC
- PSDN name
- Thru GW address

**to Fig.10N**

XCT file

# FIG.10M

from
Fig.10L

GWD INFORMATIONS

GW INCOMING CALL ROUTING :

– Adjacent PSDN DNIC
– Adjacent PSDN name
– Thru GW DTE
– Routed to DTE address

STAGE-1
CREATION

XCT file

XI STAGE-1
CREATION

XI
stage-1
files

NPSI STAGE-1
CREATION

NPSI
stage-1
files

END

(macro-statements)

# FIG.10N

FIG.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | Proceedings 12th CONFERENCE ON LOCAL COMPUTER NETWORKS, October 5-7,1987,IEEE COMPUTER SOCIETY PRESS (US),pages 23-39 E.Benhamou et al"Practical considerations in building large internetworks" *pages 34 36* | 1 | H04L12/66 G06F15/16 |
| A | IBM TECHNICAL DISCLOSURE BULLETIN. vol. 30, no. 12, May 1988, NEW YORK US pages 251 - 252; "Shared local TPN and remote TPN list profiles" * the whole document * | 1 | |
| A | Proceedings COMPUTER NETWORKING SYMPOSIUM April 11-13,1988,IEEE COMPUTER SOCIETY PRESS, New York(US),pages 331-338.Symborski "Updating Software And Configuration Data In A Distributed Communications Network" *the whole document* | 1 | |
| A | Proceedings IEEE INFOCOM '86,April 8-10,1986 IEEE COMPUTER SOCIETY (US),pages 364-376 L.J.Cole "Network management as described in systems network architecture" *the whole document* | 1 | **TECHNICAL FIELDS SEARCHED (Int. Cl.5 )** H04L G06F |

The present search report has been drawn up for all claims

| Place of search | Date of completion of the search | Examiner |
|---|---|---|
| THE HAGUE | 20 JULY 1990 | WANZEELE R.J. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P0401)